(19) Europäisches Patentamt / European Patent Office / Office européen des brevets

(11) **EP 4 459 361 B1**

(12) **EUROPÄISCHE PATENTSCHRIFT**

(45) Veröffentlichungstag und Bekanntmachung des Hinweises auf die Patenterteilung:
**29.07.2026 Patentblatt 2026/31**

(21) Anmeldenummer: **24200920.7**

(22) Anmeldetag: **10.03.2017**

(51) Internationale Patentklassifikation (IPC):
***G02B 27/01*** *(2006.01)*

(52) Gemeinsame Patentklassifikation (CPC):
**G02B 27/0172;** G02B 2027/0123; G02B 2027/013;
G02B 2027/0178; G02B 2027/0194

(54) **BRILLENGLAS FÜR EINE ABBILDUNGSOPTIK UND DATENBRILLE**

SPECTACLE LENS FOR AN IMAGING OPTICAL UNIT AND DATA SPECTACLES

VERRE DE LUNETTES POUR UNE OPTIQUE D'IMAGERIE ET LUNETTES DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016 DE 102016105060**

(43) Veröffentlichungstag der Anmeldung:
**06.11.2024 Patentblatt 2024/45**

(62) Dokumentnummer(n) der früheren Anmeldung(en) nach Art. 76 EPÜ:
**17710714.1 / 3 430 465**

(73) Patentinhaber: **tooz technologies GmbH**
**73430 Aalen (DE)**

(72) Erfinder:
• **PUETZ, Jörg**
**73431 Aalen (DE)**
• **DAVIDKOV, Momchil**
**73431 Aalen (DE)**
• **ETTIG, Ramona**
**73466 Lachheim (DE)**
• **BARTEL, Kai**
**73547 Lorch (DE)**
• **KARTAL, Ersun**
**73430 Aalen (DE)**
• **MICHELS, Georg**
**73430 Aalen (DE)**

(74) Vertreter: **PATERIS PartmbB**
**Danckelmannstraße 9**
**14059 Berlin (DE)**

(56) Entgegenhaltungen:
DE-A1- 102014 207 492    JP-A- 2012 058 404
US-A- 4 968 117    US-A1- 2008 239 422
US-A1- 2015 338 657

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Brillenglas für eine Abbildungsoptik zum Erzeugen eines virtuellen Bildes von einem auf einem Bildgeber dargestellten Ausgangsbild. Daneben betrifft die Erfindung eine Datenbrille.

Eine Datenbrille ist eine spezielle Form eines Head Mounted Displays. Eine gängige Form von Head Mounted Displays verwendet Bildschirme, die vor den Augen getragen werden und dem Benutzer computergenerierte Bilder oder von Kameras aufgenommene Bilder präsentieren. Derartige Head Mounted Displays sind häufig voluminös und erlauben keine unmittelbare Wahrnehmung der Umgebung. In jüngerer Zeit sind Head Mounted Displays entwickelt worden, die in der Lage sind, dem Benutzer ein mit einer Kamera aufgenommenes Bild oder ein computergeneriertes Bild darzubieten, ohne die unmittelbare Wahrnehmung der Umgebung zu verhindern. Derartige Head Mounted Displays, die nachfolgend Datenbrillen genannt werden, ermöglichen die Nutzung dieser Technologie im alltäglichen Leben.

Datenbrillen können auf verschiedene Arten bereitgestellt werden. Eine Art der Datenbrille, die sich insbesondere durch ihre Kompaktheit und ästhetische Akzeptanz auszeichnet, beruht auf dem Prinzip der Wellenleitung im Brillenglas. Der zur Wellenleitung wirksame Abschnitt des Brillenglases wird im Folgenden Lichtleiter genannt. Dabei wird von einem Bildgeber generiertes Licht außerhalb des Brillenglases kollimiert und über die Stirnfläche des Brillenglases eingekoppelt, von wo aus es sich im Lichtleiter über mehrfache Reflexion bis vor das Auge ausbreitet. Ein dort befindliches optisches Element koppelt das Licht dann in Richtung auf die Augenpupille aus. Die Einkopplung in das Brillenglas und die Auskopplung aus dem Brillenglas können dabei entweder diffraktiv, reflektiv oder refraktiv erfolgen. Bei einem diffraktiven Ein- oder Auskoppeln finden als Ein- und Auskopplungselemente Beugungsgitter annähernd gleicher Strichzahl Verwendung, wobei die stark dispersiven Wirkungen der einzelnen Gitter untereinander kompensiert werden. Auf Beugungsgittern beruhende Ein- und Auskoppelelemente sind beispielsweise in US 2006/0126181 A1 und in US 2010/0220295 A1 beschrieben. Beispiele für Datenbrillen mit reflektiven oder refraktiven Ein- oder Auskoppelelementen sind in US 2012/0002294 A1 beschrieben.

Im Falle einer Sehschwäche/Fehlsichtigkeit des Brillenträgers wird diese in der Regel über eine sphärische, torische oder individuell geformte Fläche auf der dem Betrachter zugewandten Seite korrigiert. Der Bereich, der hierbei individualisiert wird, schließt im Falle einer Datenbrille mit optisch wirksamen Flächen des Lichtleiters auf der Glasrückseite diese mit ein und verursacht damit eine Veränderung der für die Datenabbildung benötigten Flächeneigenschaften. Das führt zu einer Verschlechterung der Abbildungsqualität der eingespielten Daten bis hin zu einer Zerstörung der Abbildung. Gleiches gilt prinzipiell auch für die Glasvorderseite wie z.B. bei FSP (Front Side Progressive) Brillengläsern oder auch Gläsern, bei denen die optische Korrektur auf Front- und Rückfläche aufgeteilt wird.

Zur Gewährleistung sowohl der Abbildungsqualität als auch der individuellen Korrekturleistung der Rückfläche des Glases ohne Anpassung des Optikdesigns, d.h. des Lichtleiters, für jede individuelle Korrekturwirkung wird daher eine Entkopplung benötigt, so dass das Licht, das zur Abbildung beiträgt, weiterhin an der benötigten Flächenform reflektiert wird, und das Licht, das von außen durch das Glas zum Auge des Betrachters gelangt, ungehindert durch den Korrektionsbereich gelangen kann und damit die Korrektur erhält, die gewünscht ist.

Ein zweiter Anwendungsbereich, in dem eine Entkopplung benötigt wird, ist die Kombination einer Datenbrille mit zusätzlichen oberflächennahen Funktionen. Beispielsweise wird zur Realisierung einer Sonnenbrillenfunktion meistens eine Absorptions- oder Polarisationsschicht, oder ein Absorber im Volumen des Glases eingesetzt, um die Intensität von Sonnenlicht, das das Auge des Benutzers erreicht, zu reduzieren. Dies kann auch adaptive Systeme wie z.B. photochrome Schichten, elektrooptische Systeme u.a. umfassen. Die erhöhte Absorption führt allerdings zu der unerwünschten Nebenwirkung, dass auch das Licht, das die Abbildung des Displays ermöglichen soll, stark reduziert wird. Da durch die Reflexionen im Lichtleiter das Licht mehrfach und unter flacherem Winkel die absorbierende Schicht durchläuft, wird das Nutzlicht des Displays sogar zu einem noch größeren Faktor reduziert, als das unerwünschte Sonnenlicht. Weitere Beispiele für oberflächennahe Funktionen sind Volumenhologramme, holografische optische Elemente (HOEs), diffraktive optische Elemente (DOEs), Gravuren, Beschichtungen, Beklebungen, Bedruckungen, Deko-Elemente, Schmuck oder dergleichen. Funktionsschichten für Brillengläser sind bspw. in US 6,231,183 B1 beschrieben.

Die JP 2012058404 A beschreibt einen Lichtleiter für Displays, die beispielsweise in eine Brille integriert sein können. Mittels einer Beschichtung auf Korrektursubstraten, welche auf den Außenseiten eines Lichtleiters angebracht sind, kann an den Grenzflächen zwischen die Korrektursubstrate und Luft eine Totalreflektion herbeigeführt werden.

Die US 2008/0239422 A1 beschreibt einen Lichtleiter für ein Head Mounted Display, an dessen Außenflächen Totalreflexion stattfindet, mit deren Hilfe das Licht durch den Lichtleiter geleitet wird.

Die US 4,968,117 beschreibt einen optischen Kombinierer mit einer diffraktiven reflektiven Beschichtung.

In WO 2015/158833 wird vorgeschlagen, zur Entkopplung des Lichtkanals von der Vorder- und Rückseite des Brillenglases einen Luftspalt oder ein winkelselektives Interferenzschichtsystem zwischen dem Lichtkanal einerseits und der Vorderseite oder der Rückseite andererseits anzuordnen. Durch eine Entkopplung des Lichtkanals von der Vorder- und Rückseite des Brillenglases wird der Lichtkanal auch vor Kratzern, Fingerabdrücken, Wassertropfen etc. geschützt, und somit wird auch vermieden, dass die Bildübertragung durch Umwelteinflüsse beeinträchtigt wird.

Die Varianten Luftspalt und winkelselektives Interferenzschichtsystem sind jedoch technologisch herausfordernd. Bei der Lösung mit dem Luftspalt liegen die größten Herausforderungen im Gewährleisten der mechanischen Stabilität und der Langzeitstabilität. Durch Deformationen, Umwelteinflüsse, Migration und Diffusion von Verunreinigungen bzw. Bestandteilen der Komponenten sowie Verschmutzungen kann es zu einer Beeinträchtigung der optischen Funktionen kommen. Bei einem winkelselektiven Interferenzschichtsystem besteht die technologische Herausforderung insbesondere in der Massenfertigung (es sind über 100 Einzelschichten notwendig) und der Gewährleistung der mechanischen und thermischen Stabilität.

Es ist daher eine erste Aufgabe der Erfindung, ein vorteilhaftes Brillenglas für eine Abbildungsoptik zum Erzeugen eines virtuellen Bildes zur Verfügung zu stellen. Eine zweite Aufgabe ist es, eine vorteilhafte Abbildungsoptik zur Verfügung zu stellen, und eine dritte Aufgabe der Erfindung ist es, eine vorteilhafte Datenbrille zur Verfügung zu stellen.

Die erste Aufgabe wird durch ein Brillenglas nach Anspruch 1 gelöst, die zweite Aufgabe durch eine Abbildungsoptik nach Anspruch 15 und die dritte Aufgabe durch eine Datenbrille nach Anspruch 16. Die abhängigen Ansprüche enthalten vorteilhafte Ausgestaltungen der Erfindung.

Ein erfindungsgemäßes Brillenglas für eine Abbildungsoptik zum Erzeugen eines virtuellen Bildes von einem auf einem Bildgeber dargestellten Ausgangsbild umfasst einen Grundkörper und zumindest ein an dem Grundkörper angebrachtes Ergänzungselement. Das zumindest eine Ergänzungselement kann dabei eine Beschichtung, eine Folie, ein optisches Formteil, ein elektro-optisches System oder dergleichen sein.

Der Grundkörper besteht zumindest in einer an das zumindest eine Ergänzungselement angrenzenden Schicht aus einem Grundkörpermaterial mit einem ersten Brechungsindex $n_1$. Dieser Brechungsindex $n_1$ kann insbesondere über den gesamten Grundkörper konstant sein. Der Grundkörper kann dann insbesondere aus einem einheitlichen Material bestehen. Außerdem weist der Grundkörper eine dem Auge zuzuwendende Innenfläche, eine vom Auge abzuwendende Außenfläche und einen Lichtleitabschnitt auf, wobei sich der Lichtleitabschnitt zwischen einem Einkopplungsabschnitt zum Einkoppeln eines Abbildungsstrahlengangs zwischen die Innenfläche und die Außenfläche und einer Auskopplungsstruktur zum Auskoppeln des Abbildungsstrahlengangs aus dem Grundkörper erstreckt. In dem Lichtleitabschnitt wird der eingekoppelte Abbildungsstrahlengang durch Reflexion an wenigstens einem Reflexionsabschnitt der Innenfläche und/oder der Außenfläche zur Auskopplungsstruktur geleitet.

Das zumindest eine Ergänzungselement ist an der Innenfläche oder der Außenfläche des Grundkörpers angebracht, wobei es mit wenigstens einem Reflexionsabschnitt der Innenfläche und/oder der Außenfläche des Grundkörpers überlappt. Zumindest im Überlappbereich des zumindest einen Ergänzungselements mit dem wenigstens einen Reflexionsabschnitt des Grundkörpers ist eine viskose oder feste Zwischenschicht zwischen dem zumindest einen Ergänzungselement und dem Grundkörper angeordnet. Eine viskose Zwischenschicht kann dabei eine hohe Viskosität aufweisen, d.h. zähflüssig sein, oder eine niedrige Viskosität, d.h. dünnflüssig sein. Insbesondere umfasst das Ergänzungselement ein an der Innenfläche des Grundkörpers angebrachtes erstes Korrekturglas und/oder ein an der Außenfläche des Grundkörpers angebrachtes zweites Korrekturglas

Im erfindungsgemäßen Brillenglas weist das Material der viskosen oder festen Zwischenschicht einen zweiten Brechungsindex $n_2$ auf, der die Bedingung $n_2 < n_1 \sin(\theta_E)$ erfüllt, wobei $\theta_E$ einen Einfallswinkel der vom Einkopplungsabschnitt ausgehenden und auf den zumindest einen Reflexionsabschnitt einfallenden Lichtstrahlen des Abbildungsstrahlengangs repräsentiert, der derart gewählt ist, dass mindestens 50 % der Lichtstrahlen des Abbildungsstrahlengangs, insbesondere mindestens 75 % der Lichtstrahlen des Abbildungsstrahlengangs, einen Einfallswinkel $\theta > \theta_E$ auf den wenigstens einen Reflexionsabschnitt aufweisen. Vorzugsweise ist $\Theta_E$ jedoch derart gewählt, dass mindestens 90 % der Lichtstrahlen, weiter vorzugsweise mindestens 95 % und idealerweise 100 % der Lichtstrahlen des Abbildungsstrahlengangs einen Einfallswinkel $\theta > \theta_E$ auf den wenigstens einen Reflexionsabschnitt aufweisen.

Vorzugsweise ist das Material der viskosen oder festen Zwischenschicht zudem so gewählt, das es weniger als 20 % der Lichtstrahlen, insbesondere weniger als 5 % der Lichtstrahlen und vorzugsweise weniger als 1% der Lichtstrahlen des Abbildungsstrahlengangs absorbiert.

Wenn oben genannte Bedingung erfüllt ist, ist der zweite Brechungsindex $n_2$ derart niedriger als der erste Brechungsindex $n_1$, dass der Grenzwinkel für Totalreflexion an dem gesamten wenigstens einen Reflexionsabschnitt kleiner als der Einfallswinkel $\theta_E$ der vom Einkopplungsabschnitt ausgehenden und auf den Reflexionsabschnitt einfallenden Lichtstrahlen des Abbildungsstrahlengangs ist. Hierbei werden der Grenzwinkel und der Einfallswinkel vom Flächenlot an der jeweiligen Stelle des Reflexionsabschnitts der Innen- oder Außenfläche des Grundkörpers aus gemessen. Der Einfallswinkel $\theta_E$ kann entweder der Einfallswinkel eines unmittelbar vom Einkopplungsabschnitt ausgehenden Lichtstrahls oder der Einfallswinkel eines vom Einkopplungsabschnitt ausgehenden und im Lichtleitabschnitt bereits von mindestens einem Reflexionsabschnitt reflektierten Lichtstrahls sein. Bei einem Lichtstrahl, der aus der Umgebung in das Brillenglas einfällt und somit nicht Teil des Abbildungsstrahlengangs ist, ist der Einfallswinkel auf die Reflexionsfläche kleiner als er Grenzwinkel, so dass solche Lichtstrahlen an der Grenzfläche des Lichtleiters zur Zwischenschicht nicht total reflektiert werden und das Brillenglas passieren können.

Vorzugsweise ist die oben genannte Bedingung $n_2 < n_1 \sin(\theta_E)$ im gesamten Wellenlängenbereich des Abbildungsstrahlengangs erfüllt, um möglichst geringe Verluste aufgrund von Transmission zu erhalten. Zusätzlich oder alternativ ist die oben genannte Bedingung $n_2 < n_1 \sin(\theta_E)$ im gesamten sichtbaren Wellenlängenbereich erfüllt, um ein farbechtes virtuelles Bild erzeugen zu können. In manchen Fällen, in denen ein farbechtes Bild nicht benötigt wird, kann die Bedingung $n_2 < n_1 \sin(\theta_E)$ jedoch auch für lediglich einen Teil des sichtbaren Wellenlängenbereiches erfüllt sein. In diesem Fall kann der Abbildungsstrahlengang dann auch auf diesen Teil des Spektrums begrenzt sein. Je nach Anwendung kann aber auch der Verlust eines spektralen Teils des Abbildungsstrahlengangs aufgrund von Transmission durch einen Reflexionsabschnitt in Kauf genommen werden.

Mit der viskosen oder festen Zwischenschicht kann eine Entkopplung des Lichtkanals von der Vorder- und Rückseite des Brillenglases erfolgen. Die Zwischenschicht ist dabei einfacher herzustellen und weist sowohl thermisch als auch mechanisch eine höhere Stabilität als ein Luftspalt oder ein Interferenzschichtsystem auf.

In einer vorteilhaften Ausgestaltung des erfindungsgemäßen Brillenglases weist das zumindest eine Ergänzungselement einen dritten Brechungsindex auf, der dem ersten Brechungsindex entspricht, so dass eine Beeinträchtigung von durch das Brillenglas hindurchtretenden Umgebungslichtstrahlen weitgehend vermieden werden kann. Unter entsprechenden Brechungsindizes sollen im Rahmen der vorliegenden Beschreibung solche Brechungsindizes verstanden werden, die sich nicht mehr als 5 ‰ vorzugsweise nicht mehr als 1 ‰ voneinander unterscheiden.

Im erfindungsgemäßen Brillenglas braucht die viskose oder feste Zwischenschicht lediglich im Bereich des Überlapps des zumindest einen Ergänzungselements mit dem wenigstens einen Reflexionsabschnitt des Grundkörpers vorhanden zu sein. Fertigungstechnisch ist es jedoch vorteilhaft, wenn die viskose oder feste Zwischenschicht in dem gesamten Bereich, in dem das zumindest eine Ergänzungselement am Grundkörper angebracht ist, vorhanden ist. Dadurch entfällt die Notwendigkeit, in verschiedenen Kontaktbereichen Zwischenschichten mit verschiedenen Materialien anzuordnen. Außerdem wäre der Übergang zwischen den Zwischenschichten aus verschiedenen Materialien aufgrund der Änderung des Brechungsindex an der lateralen Grenze zwischen den Zwischenschichten sichtbar, da durch das Brillenglas hindurchtretende Umgebungslichtstrahlen von den Zwischenschichten unterschiedlich gebrochen würden. Zwar ist dies nicht notwendigerweise störend, wenn die Grenze zwischen den Zwischenschichten am Rand des Gesichtsfeldes liegt. Wenn die viskose oder feste Zwischenschicht jedoch in dem gesamten Bereich, in dem das zumindest eine Ergänzungselement am Grundkörper angebracht ist, vorhanden ist, würde die Zwischenschicht lediglich zu einer gleichmäßigen Brechung aller Umgebungslichtstrahlen führen, die für den Brillenträger nicht bemerkbar ist und daher nicht störend wirkt.

Im erfindungsgemäßen Brillenglas umfasst der Grundkörper zumindest im Bereich des Lichtleitabschnitts eine Oberflächenschicht. Dabei umfasst die Oberflächenschicht des Grundkörpers wenigstens eine an die viskose oder feste Zwischenschicht angrenzende Schicht aus dem Material mit dem ersten Brechungsindex oder einem Material mit einem dem ersten Brechungsindex entsprechenden Brechungsindex. Eine solche Oberflächenschicht auf zumindest einem Bereich des Lichtleitabschnitts ermöglicht es beispielsweise, die Auskopplungsstruktur, inklusive eventuell vorhandener Funktionsschichten, die häufig in der Außenfläche des Brillenglases bspw. als Fresnelstruktur gebildet ist, zu füllen, ohne dass die Füllung aufgrund von Brechungsindexunterschieden zum Material des Grundkörpers das durch das Auskopplungselement hindurchtretende Umgebungslicht ablenkt. Wenn die Füllung mit dem Material der viskosen oder festen Zwischenschicht erfolgen würde, wäre diese Füllung aufgrund des vom Material des Grundkörpers verschiedenen Brechungsindex und der variierenden Dicke der Füllung sichtbar und würde das durch das Brillenglas hindurchtretende Umgebungslicht ablenken. Durch die im Bereich des Auskopplungsabschnitts aufgebrachte brechungsindexangepasste Oberflächenschicht kann eine Außenfläche des Lichtleitabschnitts mit einer optisch ebenen Fläche gewährleistet werden, so dass die Zwischenschicht auf der optisch ebenen Fläche eine Schicht mit gleichmäßiger Dicke bilden kann. Die Zwischenschicht würde dann in dem Bereich, in dem sie vorhanden ist, lediglich zu einer gleichmäßigen Brechung aller Umgebungslichtstrahlen führen, die für den Brillenträger nicht bemerkbar ist und daher nicht störend wirkt.

Die Oberflächenschicht des Grundkörpers kann auch aus einer Mehrzahl von Schichten bestehen, wobei die Schichten aus Materialien bestehen, deren Brechungsindizes größer als der zweite Brechungsindex sind. Die an die viskose oder feste Zwischenschicht angrenzende Schicht besteht dann aus dem Material mit dem ersten Brechungsindex oder aus einem Material mit einem dem ersten Brechungsindex entsprechenden Brechungsindex. Die Brechungsindizes der Schichten nehmen ausgehend von der an die viskose oder feste Zwischenschicht angrenzenden Schicht zu. Auf diese Weise kann der Einfallswinkel zur viskosen oder festen Zwischenschicht hin graduell vergrößert werden, so dass beim Eintritt des Abbildungsstrahlengangs in den Lichtleiter die Eintrittswinkel in den Lichtleiter kleiner sein können als ohne die Oberflächenschicht mit den Schichten. Der gleiche Effekt kann auch erreicht werden, wenn statt einer Oberflächenschicht mit einer Anzahl von Schichten eine Oberflächenschicht aus einem Material mit Brechungsindexgradient Verwendung findet, wobei der niedrigste Brechungsindex dem ersten Brechungsindex entspricht und die Oberflächenschicht so orientiert ist, dass sie mit dem niedrigsten Brechungsindex an die viskose oder feste Zwischenschicht angrenzt.

In einer vorteilhaften Weiterbildung des erfindungsgemäßen Brillenglases kann sich zwischen der viskosen oder der festen Zwischenschicht und dem Grundkörper oder zwischen der viskosen oder der festen Zwischenschicht und der Oberflächenschicht des Grundkörpers eine Folie mit bspw. einer Dicke im Bereich von 10 $\mu$m bis 2mm, vorzugsweise im Bereich von 100 $\mu$m bis 1mm und insbesondere im Bereich von 200 $\mu$m bis 500 $\mu$m oder ein Formteil befinden. Obwohl diese nicht notwendigerweise einen dem ersten Brechungsindex entsprechenden Brechungsindex aufweisen muss, ist es vorteilhaft, wenn der Brechungsindex des Folienmaterials dem ersten Brechungsindex entspricht. Die Folie kann die Herstellung des Brillenglases insofern erleichtern, als dass sie als permanente oder temporäre Form bei der Aushärtung der Zwischenschicht dienen kann und die Geometrie vorgibt. Ein weiterer Vorteil einer Folie kann darin bestehen, dass die Zwischenschicht zuerst auf die Folie aufgebracht werden kann und die Folie dann auf die Oberflächenschicht des Grundkörpers aufgebracht wird. Dies ermöglicht zudem eine größere Materialauswahl, da die Folie als Haftungsvermittler dienen kann, so dass das Material der Zwischenschicht nicht unbedingt eine gute Haftung auf dem Material der Oberflächenschicht oder dem Material des Grundkörpers aufzuweisen braucht. Auch beim Einsatz spezieller UV-härtender Klebstoffe kann eine Folie von Vorteil sein, da die Belichtung in diesem Fall unter Sauerstoffabschluss erfolgen kann.

Das Material der viskosen oder festen Zwischenschicht kann jedoch auch selbst ein Klebstoff sein, mit dem beispielsweise das Ergänzungselement am Grundkörper befestigt ist. Alternativ besteht auch die Möglichkeit, dass die Oberflächenschicht ein Klebstoff ist, mit dem die viskose oder feste Zwischenschicht oder eine Folie, auf dem die Zwischenschicht aufgebracht ist, mit dem Grundkörper verklebt ist. Grundsätzlich besteht auch die Möglichkeit, dass sowohl die viskose oder feste Zwischenschicht als auch die Oberflächenschicht als Klebstoff ausgebildet sind.

Wie bereits mit Bezug auf die Folie beschrieben worden ist, kann die viskose oder feste Zwischenschicht auf einem Trägermaterial aufgebracht sein und dann zusammen mit dem Trägermaterial am Grundkörper angebracht werden. Das Trägermaterial braucht aber nicht zwingend eine Folie zu sein. Beispielsweise kann auch das Ergänzungselement als Trägermaterial für die viskose oder feste Zwischenschicht dienen.

Der wenigstens eine Reflexionsabschnitt der Innenfläche und/oder der Außenfläche des Grundkörpers kann eine Freiform aufweisen. Unter einer Freiform soll dabei eine Fläche zu verstehen sein, die frei definiert werden kann, ohne dass sie sphärisch, torisch oder durch eine andere Regelgeometrie beschreibbar zu sein braucht. Auf diese Weise können die Reflexionsabschnitte des Lichtleitabschnitts den Abbildungsstrahlengang manipulieren, so dass sie die Abbildung mitformende oder korrigierende Funktionen wahrnehmen können. Im Falle einer Freiformfläche sollte $\theta_E$ so gewählt sein, dass an jedem Punkt der Freiformfläche mindestens 50 % der Lichtstrahlen des Abbildungsstrahlengangs, insbesondere mindestens 75 % der Lichtstrahlen des Abbildungsstrahlengangs, einen Einfallswinkel $\theta > \theta_E$ aufweisen, um die Abbildung mitformende oder korrigierende Wirkung der Freiformfläche nicht zu beeinträchtigen. Vorzugsweise ist $\theta_E$ dabei derart gewählt, dass an jedem Punkt der Freiformfläche mindestens 90 % der Lichtstrahlen, weiter vorzugsweise mindestens 95 % und idealerweise 100 % der Lichtstrahlen des Abbildungsstrahlengangs einen Einfallswinkel $\theta > \theta_E$ aufweisen. Hierbei ist zu beachten, dass die Lichtstrahlen des Abbildungsstrahlengangs nicht notwendigerweise vollständig kollimiert sind, sondern typischerweise eine geringe Divergenz aufweisen können, wobei dann bspw. die Auskopplungsstruktur für eine abschließende Kollimation des in Richtung auf das Auge ausgekoppelten Abbildungsstrahlengangs sorgt. Im Falle einer reinen Reflexionsfläche ohne die Abbildung mitformende oder korrigierende Funktion kann es dagegen Zonen geben, in denen weniger als der geforderte Prozentsatz an Lichtstrahlen einen Einfallswinkel $\theta > \theta_E$ aufweisen, solange über die gesamte Reflexionsfläche gesehen der geforderte Prozentsatz an Lichtstrahlen einen Einfallswinkel $\theta > \theta_E$ aufweist. Die Zonen, in denen weniger als der geforderte Prozentsatz an Lichtstrahlen einen Einfallswinkel $\theta > \theta_E$ aufweisen, sollten dabei räumlich umso kleiner sein, je weniger Lichtstrahlen einen Einfallswinkel $\theta > \theta_E$ aufweisen, um eine räumliche Intensitätsschwankung im virtuellen Bild unter der Wahrnehmungsgrenze zu halten.

Wenn die Innenfläche und/oder die Außenfläche des Grundkörpers im Bereich des Lichtleitabschnitts eine Freiform aufweist, das Brillenglas auf seiner Außenseite jedoch eine optisch ebene sphärische Fläche aufweisen soll, kann dies zu Variationen in der Dicke der viskosen oder festen Zwischenschicht führen. Bei starken Krümmungen der Freiformflächen kann die Wahrnehmung der Umgebung durch das Brillenglas beeinträchtigt werden. In diesem Fall ist es vorteilhaft, wenn die viskose oder feste Zwischenschicht eine gleichmäßige Dicke aufweist und auf der dem Grundkörper abgewandten Seite der viskosen oder festen Zwischenschicht eine Deckschicht aufgebracht ist, die aus einem Material mit einem vierten Brechungsindex besteht, wobei der vierte Brechungsindex dem ersten Brechungsindex entspricht, und die Deckschicht auf ihrer der viskosen oder festen Zwischenschicht abgewandten Seite eine optisch ebene sphärische Oberfläche besitzt.

Eine erfindungsgemäße Abbildungsoptik zeichnet sich dadurch aus, dass sie wenigstens ein erfindungsgemäßes Brillenglas umfasst.

Eine erfindungsgemäße Datenbrille zeichnet sich dadurch aus, dass sie wenigstens eine erfindungsgemäße Abbildungsoptik umfasst.

Die mit der erfindungsgemäßen Abbildungsoptik und die mit der erfindungsgemäßen Datenbrille erzielbaren Vorteile ergeben sich unmittelbar aus den mit dem erfindungsgemäßen Brillenglas erzielten Vorteilen. Auf diese Vorteile wird daher verwiesen.

Weitere Merkmale, Eigenschaften und Vorteile der vorliegenden Erfindung ergeben sich aus der nachfolgenden Beschreibung von Ausführungsbeispielen unter Bezugnahme der beiliegenden Figuren.

Figur 1            zeigt eine Datenbrille in einer perspektivischen Darstellung.

Figur 2            zeigt ein Brillenglas und eine Einkopplungsvorrichtung der Datenbrille aus Figur 1 in einer schematischen Darstellung.

Figur 3            zeigt ein Beispiel für eine Auskopplungsstruktur im Brillenglas.

Figuren 4 bis 12   Beispiele für Varianten von erfindungsgemäßen Brillengläsern

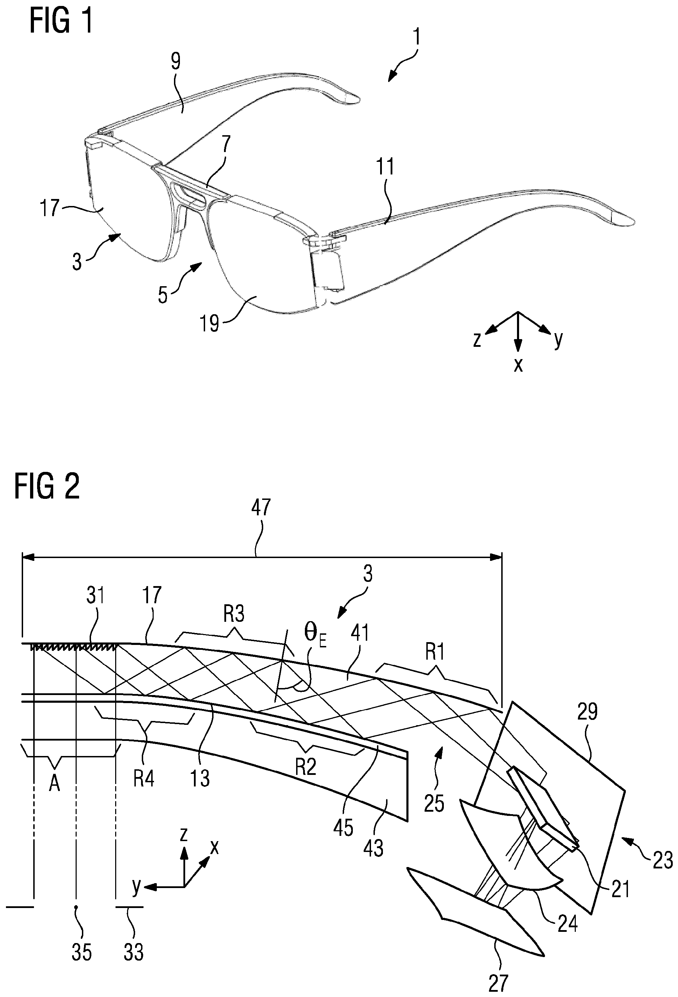

Nachfolgend wird die Erfindung am Beispiel einer Datenbrille mit einem erfindungsgemäßen Brillenglas beschrieben. Das Brillenglas ist Teil einer Abbildungsoptik zum Erzeugen eines virtuellen Bildes von einem auf einem Bildgeber dargestellten Ausgangsbild. Eine entsprechende Datenbrille 1 ist in Figur 1 gezeigt. Die Abbildungsoptik mit dem Brillenglas 3 ist in Figur 2 stark schematisiert dargestellt.

Die Datenbrille 1 umfasst zwei Brillengläser 3, 5, die von einem Brillengestell 7 mit zwei Brillenbügeln 9, 11 gehalten werden. Die Brillengläser umfassen jeweils einen Grundkörper 41, der bei aufgesetzter Brille eine zum Auge des Benutzers weisende Innenfläche 13 (in Figur 2 zu sehen) und eine vom Auge des Benutzers weg weisende Außenfläche 17, 19 (in den Figuren 1 und 2 zu sehen) aufweist. Im vorliegenden Ausführungsbeispiel befindet sich im Brillenbügel 9 oder zwischen dem Brillenbügel 9 und dem Brillenglas 17 ein Bildgeber 21 (in Figur 2 gezeigt), der beispielsweise als Flüssigkristallanzeige (LCD- oder LCoS-Display, LCoS: Liquid Crystal on Silicon), als auf Leuchtdioden basierendes Display (LED-Display) oder als auf organischen Leuchtdioden basierendes Display (OLED-Display) ausgebildet sein kann. Zwischen dem Bildgeber 21 und dem Brillenglas 3 ist als Teil der Abbildungsoptik eine Einkopplungseinrichtung 23 angeordnet, die im vorliegenden Ausführungsbeispiel eine Eintrittsfläche 24, eine erste Spiegelfläche 27 und eine zweite Spiegelfläche 29 aufweist und als Prisma aus Glas oder transparentem Kunststoff ausgebildet sein kann, wobei die Eintrittsfläche 24 und die Spiegelflächen 27, 29 durch Flächen des Prismas gebildet sind. Wie das die Einkopplungseinrichtung 23 bildende Prisma kann der Grundkörper 41 des Brillenglases 3 aus einem organischen Glas, d.h. aus einem transparenten Kunststoff, hergestellt sein. Aber auch die Herstellung aus einem mineralischen Glas oder einem anderen transparenten anorganischen Material ist möglich. Mit Hilfe der Einkopplungseinrichtung 23 kann ein vom Bildgeber ausgehender Abbildungsstrahlengang über einen Einkopplungsabschnitt 25 des Grundkörpers 41 zwischen die Innenfläche 13 und die Außenfläche 17 des Grundkörpers eingekoppelt werden.

Im vorliegenden Ausführungsbeispiel sind der die Einkopplungseinrichtung 23 bildende Block und das Brillenglas 3 als getrennte Einheiten geformt und anschließend miteinander verkittet worden. Beide Einheiten können aber auch als ein monolithisches Bauteil durch Urformen oder durch Bearbeitung hergestellt werden. Der die Einkopplungseinrichtung 23 bildende Block und das Brillenglas 3 können dabei aus demselben oder aus unterschiedlichen Materialien hergestellt sein.

Die Einkopplungsvorrichtung 23 kann außer zum Einkoppeln des vom Bildgeber 21 ausgehenden Abbildungsstrahlengangs in das Brillenglas 3 auch zum Kollimieren der von den Bildpunkten des vom Bildgeber 21 dargestellten Ausgangsbildes ausgehenden divergenten Strahlenbündel des Abbildungsstrahlengangs dienen. Hierzu können die Eintrittsfläche 24, die erste Spiegelfläche 27 und die zweite Spiegelfläche 29 entsprechend gekrümmte Flächen aufweisen. Beispielsweise kann die Eintrittsfläche 24 als ellipsoide Fläche ausgebildet sein, während die beiden Spiegelflächen 27, 29 jeweils als hyperbolische Flächen ausgebildet sind. Das Brillenglas 3 und die Einkopplungseinrichtung 23 bilden zusammen die Abbildungsoptik der Datenbrille 1, welche ein virtuelles Bild des auf den Bildgeber 21 dargestellten Ausgangsbildes erzeugt.

Von der Einkopplungseinrichtung 23 wird der mittels der Eintrittsfläche 24 und der beiden Spiegelflächen 27, 29 kollimierte Abbildungsstrahlengang über den Einkopplungsabschnitt 25 des Grundkörpers 41 zwischen die Innenfläche 13 und die Außenfläche 17 in den Grundkörper 41 eingekoppelt. Im Grundkörper 41 wird der Abbildungsstrahlengang dann mittels innerer Totalreflexionen an der Außenfläche 17 und der Innenfläche 13 des Grundkörpers 41 zu einer Auskopplungsstruktur, die im vorliegenden Fall als Fresnelstruktur 31 ausgebildet ist, geleitet. Von der Fresnelstruktur 31 wird der kollimierte Abbildungsstrahlengang ausgekoppelt, indem er derart in Richtung auf die Innenfläche 17 des Grundkörpers 41 reflektiert wird, dass er durch diese refraktiv in Richtung auf die Austrittspupille 33 der Abbildungsoptik aus dem Brillenglas 3 austritt. Die Austrittspupille 33 befindet sich bei aufgesetzter Datenbrille 1 am Ort der Pupille 35 des Nutzerauges.

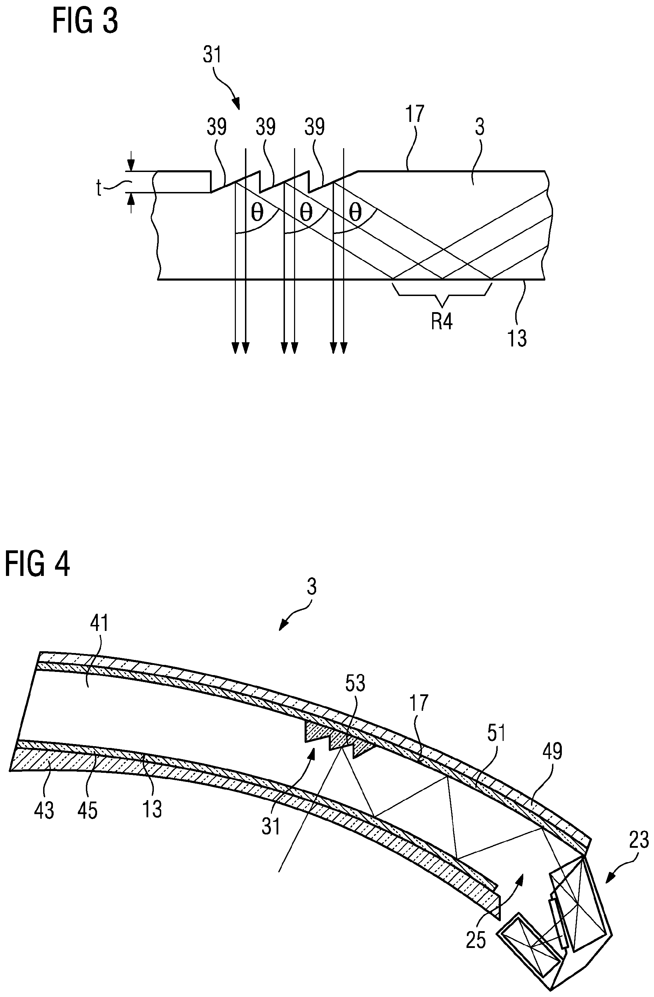

Ein Beispiel für eine Fresnelstruktur 31, wie sie in der Abbildungsoptik der Datenbrille 1 Verwendung finden kann, ist in Fig. 3 beschrieben. Die gezeigte Fresnelstruktur 31 weist Facetten 39 auf, die im vorliegenden Ausführungsbeispiel so orientiert sind, dass ein auf die Facette 39 auftreffender Nullstrahl des Abbildungsstrahlengangs in Richtung auf die Innenfläche 17 des Grundkörpers 41 reflektiert wird. Im vorliegenden Ausführungsbeispiel sind die Facetten 39 teilverspiegelt, so dass aus der Umgebung stammende Strahlenbündel die teilverspiegelten Facetten 39 in Richtung auf die Austrittspupille 33 passieren können. Auf diese Weise liegt im Bereich der Austrittspupille 33 ein Strahlengang vor, in dem der Abbildungsstrahlengang mit einem aus der Umgebung stammenden Strahlengang überlagert ist, so dass bei einem Nutzer einer mit der Abbildungsoptik versehenen Datenbrille 1 der Eindruck entsteht, das virtuelle Bild schwebe in der Umgebung.

Auf dem Weg zur Fresnelstruktur 31 erfolgen im Grundkörper 41 nach dem Einkoppeln des Abbildungsstrahlengangs vier Totalreflexionen, von denen die erste Totalreflexion an einem Reflexionsabschnitt R1 der Außenfläche 17 des Grundkörpers 41 erfolgt, die zweite Totalreflexionen an einem Reflexionsabschnitt R2 der Innenfläche 13 des Grundkörpers 41 erfolgt, die dritte Totalreflexionen wieder an einem Reflexionsabschnitt R3 der Außenfläche 17 des Grundkörpers 41 erfolgt und die vierte Totalreflexionen schließlich wieder an einem Reflexionsabschnitt R4 der Innenfläche 13 des Grundkörpers 41 erfolgt. Die Fresnelstruktur 31 befindet sich in der Außenfläche des Grundkörpers 41, wohin der Abbildungsstrahlengang vom vierten Reflexionsabschnitt R4 reflektiert wird. Mittels der Fresnelstruktur 31 wird der Abbildungsstrahlengang dann wie beschrieben in Richtung auf die Austrittspupille der Abbildungsoptik aus dem Brillenglas 3 ausgekoppelt. In Fig. 3 sind ein Mittelstrahl und zwei Randstrahlen eines vom Bildgeber 21 ausgehenden divergenten Strahlenbündels gezeigt. Durch die Kollimation mittels der eine Kollimationsoptik bildenden Einkopplungsvorrichtung 23 liegt im Brillenglas 3 ein weitgehend kollimierter Strahlengang vor, der dann als weitgehend kollimierter Strahlengang von der Fresnelstruktur 31 ausgekoppelt wird.

Das Brillenglas 3 umfasst im vorliegenden Ausführungsbeispiel ein Ergänzungselement in Form eines am Grundkörper 41 angeordneten Korrekturglases 43, mit dem eine Fehlsichtigkeit des Benutzers der Datenbrille ausgeglichen wird. Das Korrekturglas 43, das wie der Grundkörper 41 aus einem organischen Glas oder einem mineralischen Glas hergestellt sein kann, ist mittels einer Klebstoffschicht 45, die eine Zwischenschicht zwischen dem Grundkörper 41 und dem Korrekturglas 43 bildet, am Grundkörper 41 angebracht. Das Material des Grundköpers weist dabei einen ersten Brechungsindex $n_1$ auf und der Klebstoff der Klebstoffschicht 45 einen zweiten Brechungsindex $n_2$. Das Material des Korrekturglases weist einen Brechungsindex auf, der insbesondere dem ersten Brechungsindex $n_1$ des Grundkörpermaterials entsprechen kann, aber nicht muss.

Damit an der die Grenzfläche des Grundkörpers 41 zur Klebstoffschicht 45 bildenden Innenfläche 13 des Grundkörpers 41 eine Totalreflexion erfolgen kann, müssen die Einfallswinkel $\theta_E$ der Strahlen des Abbildungsstrahlengangs bezogen auf das Flächenlot eines Flächenelementes, an dem die Totalreflexion stattfinden soll, größer als der Grenzwinkel $\theta_G$ für das Auftreten von Totalreflexion sein. Der Grenzwinkel ist dabei durch das Verhältnis des ersten Brechungsindex $n_1$, also des Brechungsindex des Materials des Grundkörpers 41, zum zweiten Brechungsindex $n_2$, also dem Brechungsindex des Klebstoffes 45 der Zwischenschicht, bestimmt und lässt sich aus der Gleichung

$$\theta_G = \arcsin\,(n_2/n_1) \qquad\qquad (1)$$

berechnen. Für ein gegebenes Design des Grundkörpers 41 und der Einkopplungseinrichtung 23 sind der Einfallswinkel $\theta_E$ der Strahlen des Abbildungsstrahlengangs auf das reflektierende Flächenelement und der Brechungsindex $n_1$ des Materials des Grundkörpers 41 bekannt. Damit Totalreflexion auftreten kann, muss nun der Brechungsindex $n_2$ der vom Klebstoff gebildeten Zwischenschicht 45 so gewählt werden, dass der Grenzwinkel $\theta_G$ kleiner als der Einfallswinkel $\Theta_E$ ist. Dies ist erfüllt, wenn am reflektierenden Flächenelement die Ungleichung

$$n_2 < n_1\,\sin(\theta_E) \qquad\qquad (2)$$

erfüllt ist. Da $\sin(\theta_E)$ immer kleiner oder gleich 1 ist, muss der zweite Brechungsindex $n_2$ also kleiner als der erste Brechungsindex $n_1$ sein. Wie viel kleiner als $n_1$ hängt dabei von dem Einfallswinkel $\theta_E$ auf das Flächenelement - und damit vom Design des Grundkörpers 41 und der Einkopplungseinrichtung 23 - ab. Im Rahmen der Erfindung wird nun ein Einfallswinkel $\theta_E$ festgelegt, der derart gewählt, dass an dem Reflexionsabschnitt mindestens 50% der Lichtstrahlen des Abbildungsstrahlengangs, insbesondere mindestens 75 % der Lichtstrahlen des Abbildungsstrahlengangs, einen Einfallswinkel $\theta > \theta_E$ aufweisen. Im vorliegenden Ausführungsbeispiel ist der Einfallswinkel $\Theta_E$ derart gewählt, dass an dem Reflexionsabschnitt mindestens 90 % der Lichtstrahlen, weiter vorzugsweise mindestens 95 % und idealerweise 100 % der Lichtstrahlen des Abbildungsstrahlengangs einen Einfallswinkel $\theta > \theta_E$ aufweisen. Anhand des festgelegten Einfallswinkels $\theta_E$ wird dann mit Hilfe der Ungleichung (2) die Obergrenze für einen geeigneten Brechungsindex $n_2$ ermittelt. Auf der Basis des ermittelten Brechungsindex $n_2$ kann schließlich für die Zwischenschicht ein Material mit einem passenden Brechungsindex ausgewählt werden.

In dem Reflexionsabschnitt kann es Zonen geben, in denen weniger als 90 % (bzw. 50 %, 75 %, 95 % oder 100 %) der Lichtstrahlen des Abbildungsstrahlengangs einen Einfallswinkel $\theta > \theta_E$ aufweisen, solange über den gesamten Reflexionsabschnitt gesehen 90 % (bzw. 50 %, 75 %, 95 % oder 100 %) der Lichtstrahlen einen Einfallswinkel $\theta > \theta_E$ aufweisen und die Zonen, in denen weniger als 90 % (bzw. 50 %, 75 %, 95 % oder 100 %) der Lichtstrahlen einen Einfallswinkel $\theta > \theta_E$ aufweisen räumlich so klein gehalten werden, dass räumliche Intensitätsschwankung im virtuellen Bild entweder nicht wahrgenommen oder zumindest nicht als störend empfunden werden. Die Zonen, in denen weniger als 90 % (bzw. 50 %, 75 %, 95 % oder 100 %) der Lichtstrahlen einen Einfallswinkel $\theta > \theta_E$ aufweisen, können dabei räumlich umso größer sein, je näher in diesen Zonen der Anteil der Lichtstrahlen, die einen Einfallswinkel $\theta > \theta_E$ aufweisen, an dem geforderten Prozentsatz liegt.

Falls der Reflexionsabschnitt eine die Abbildung mitformende oder korrigierende Freiformfläche ist, wird $\theta_E$ so gewählt, dass an jedem Punkt der Freiformfläche mindestens 90 % (bzw. 50 %, 75 % oder 95 % oder 100 %) der Lichtstrahlen des Abbildungsstrahlengangs einen Einfallswinkel $\theta > \theta_E$ aufweisen, um die Abbildung mitformende oder korrigierende Wirkung der Freiformfläche nicht zu beeinträchtigen. Hierbei ist zu beachten, dass die Lichtstrahlen des Abbildungsstrahlengangs in der Regel nicht vollständig kollimiert sind, sondern typischerweise eine geringe Divergenz aufweisen, die bspw. von der Auskopplungsstruktur durch eine abschließende Kollimation des in Richtung auf das Auge ausgekoppelten Abbildungsstrahlengangs beseitigt wird.

Im vorliegenden Ausführungsbeispiel besteht der Grundkörper 41 aus einem Glas mit einem ersten Brechungsindex von $n_1 = 1,7$. Der kleinste Einfallswinkel $\theta_E$ beträgt ca. 55° und das Klebstoffmaterial der Zwischenschicht 45 besitzt einen zweiten Brechungsindex $n_2 = 1,3$. Der Grenzwinkel für Totalreflexion beträgt somit 49,9°, also rund 50°. Es ist somit ersichtlich, dass bei einem Einfallswinkel von 55° eine Totalreflexion auftritt.

Damit der Einfallswinkel von 55° eine Totalreflexion auftreten kann, darf der zweite Brechungsindex $n_2$, also der des Klebstoffmaterials gemäß Formel 2 den Wert 1,39 nicht überschreiten. Bei anderen Einfallswinkeln $\theta_E$ und/oder bei einem anderen Brechungsindex $n_1$ des Grundkörpermaterials würde sich eine andere obere Grenze für den Brechungsindex $n_2$ des Klebstoffmaterials ergeben.

Wenn in einer Fläche des Grundkörpers 41 mehrere Reflexionsabschnitte vorhanden sind, in denen Totalreflexionen stattfinden sollen (im vorliegenden Ausführungsbeispiel finden Totalreflexionen in den Reflexionsabschnitten R2 und R4 der Innenfläche 13 statt), wird für jeden Reflexionsabschnitt R2, R4 ein Einfallswinkel $\theta_{E1}, \theta_{E2}$ festgelegt, wobei die Einfallswinkel $\theta_{E1}$, und $\theta_{E2}$ derart gewählt sind, dass an dem jeweiligen Reflexionsabschnitt R2, R4 mindestens 75 % der Lichtstrahlen, vorzugsweise 90%, weiter vorzugsweise mindestens 95 % und idealerweise 100 % der Lichtstrahlen des Abbildungsstrahlengangs einen Einfallswinkel $\theta > \theta_{E2}$ bzw. $\theta > \theta_{E4}$ aufweisen. Für das Ermitteln des Brechungsindex $n_2$ des Materials der Zwischenschicht wird dann der kleinste dieser Einfallswinkel $\theta_{E2}, \theta_{E4}$ als der in die Ungleichung (2) einzusetzende Einfallswinkel $\theta_E$ gewählt. Auf diese Weise ist sichergestellt, dass der ermittelte Brechungsindex $n_2$ für jeden der Reflexionsabschnitte geeignet ist.

Das mit Bezug auf die Figur 2 beschriebene Beispiel für ein erfindungsgemäßes Brillenglas ist lediglich mit einem Korrekturglas 43 zur Korrektur einer Fehlsichtigkeit ausgestattet, welches mittels einer Schicht 45 aus einem niedrigbrechenden Klebstoff am Grundkörper 41 befestigt ist. Zusätzlich oder alternativ zum Korrekturglas 43 können aber auch andere Ergänzungselemente am Grundkörper 41 angebracht sein. Beispiele für Ergänzungselemente, die keine Gläser (organisch oder mineralisch) sind, sind auf den Grundkörper 41 aufgebrachte Folien oder Beschichtungen. Diese können entweder den gesamten Grundkörper 41 überdecken oder nur Teile davon. Zudem können die Ergänzungselemente unterschiedliche Funktionen erfüllen. Beispielsweise können sie dazu dienen, ein Beschlagen des Brillenglases zu verhindern (Antifog-Funktion), die Brille zu tönen oder zu verspiegeln, eine Polarisation herbeizuführen oder in Abhängigkeit von der Menge an einfallendem UV-Licht eine Tönung des Brillenglases herbeizuführen oder zu verändern (bspw. als photochrome Beschichtung). Daneben können elektrochrome Schichten (die bei Anlegen einer Spannung die Lichttransmission verändern), elektro-optische Systeme, Signaturen/Gravuren, diffraktive optische Elemente (DOEs), holografische optische Elemente (HOEs) und Schmuck-/Dekorelemente als Ergänzungselemente auf dem Grundkörper 41 aufgebracht werden. Selbstverständlich besteht auch die Möglichkeit, einen Grundkörper 41 mit mehreren der genannten Ergänzungselemente zu kombinieren.

Beispielmaterialien für den Grundkörper 41 und/oder für Ergänzungselemente aus Glas sind transparente organische oder mineralische Gläser, wobei neben anorganischen glasartigen Materialien prinzipiell auch kristalline oder keramische Materialien (z.B. Oxide, Halogenide) eingesetzt werden können. Als organische Gläser können insbesondere transparente organische Thermoplaste wie PC (Polycarbonat), PMMA (Polymethylmethacrylat), mikrokristallines PA (Polyamid) und COP/COC (Cycloolefin-Polymere und Copolymere), sowie transparente Duroplaste beispielsweise auf der Basis von Acrylaten, Polyurethanen, Polyharnstoffen, Polythiourethanen und ADC (Allyldiglykolcarbonat) eingesetzt werden.

Als Klebstoffe können prinzipiell Struktur- oder Haftklebstoffe eingesetzt werden, die über eine ausreichende Transparenz in dem relevanten Spektralbereich verfügen. Beispiele hierfür finden sich in der Gruppe der Acrylate, Urethane, Epoxy/Amine, Epoxy/Thiole sowie der Thiol-Ene, wobei die schwefelhaltigen Materialien insbesondere für höherbrechende Verklebungen mit Brechungsindizes größer als etwa 1.54 von Interesse sind.

Aus der Klasse der niedrigbrechenden Materialien sind vor allem Fluor-Acrylate und Fluor-Urethanacrylate zu nennen, mit denen sich Brechungsindizes bis hinunter zu 1.32 realisieren lassen, sowie die LSR (Liquid Silicone Rubber). Diese Klebstoffe eignen sich besonders als Zwischenschicht 45.

In dem in Figur 2 dargestellten Ausführungsbeispiel ist die Klebstoffschicht 45 mit dem zweiten Brechungsindex $n_2$ an der gesamten Kontaktfläche zwischen dem Grundkörper 41 und dem Korrekturglas 43 vorhanden. Die Totalreflexion braucht jedoch lediglich im Lichtleitabschnitt 47 des Grundkörpers 41, also im Bereich zwischen dem Einkopplungsabschnitt 25 und der Auskopplungsstruktur 31 zu erfolgen. Außerhalb dieses Lichtleitabschnittes 47 kann daher grundsätzlich auch ein anderer Klebstoff mit einem höheren Brechungsindex Verwendung finden, insbesondere ein Klebstoff mit einem dem ersten Brechungsindex $n_1$ des Grundkörpermaterials entsprechenden Brechungsindex. Fertigungstechnisch ist es jedoch von Vorteil, wenn an der gesamten Kontaktfläche dieselbe Klebstoffschicht 45 verwendet wird. Weiterhin ist in Figur 2 gezeigt, dass sich das Korrekturglas 43 bis zum Einkopplungsabschnitt 25 des Grundkörpers 41 erstreckt. Falls sich das Korrekturglas 43 nicht bis zum Einkopplungsabschnitt 25 erstreckt, sondern beispielsweise nur bis zu einem Punkt zwischen den Reflexionsabschnitten R2 und R4, so braucht sich die Klebstoffschicht 45 nicht bis zum Einkopplungsabschnitt zu erstrecken, da dort, wo sich das Korrekturglas 43 nicht befindet, die Innenfläche 13 des Grundkörpers 41 eine Kontaktfläche zu Luft mit einem Brechungsindex von im Wesentlichen 1,0 darstellt, so dass die Bedingung für Totalreflexion in diesem Bereich auch ohne Klebstoffschicht erfüllt ist.

Beispiele für Brillengläser mit unterschiedlichen Konfigurationen der niedrigbrechenden Zwischenschichten werden nachfolgend mit Bezug auf die Figuren 4 bis 12 beschrieben.

Figur 4 zeigt ein Brillenglas, bei dem außer einem Korrekturglas 43 an der Innenseite des Grundkörpers 41 als Ergänzungselement eine dünne Folie 49 auf die Außenfläche 17 des Grundkörpers 41 aufgebracht ist. Die Folie 49 ist wie das Korrekturglas 43 mittels einer Klebstoffschicht 51 am Grundkörper 41 fixiert. Der Klebstoff der Klebstoffschicht 51 besitzt einen Brechungsindex $n_2$, der gemäß Formel 2 gewählt ist und somit zu einer Totalreflexion eines über den Einkopplungsabschnitt 25 in den Grundkörper 41 eingekoppelten Abbildungsstrahlengangs an der Außenfläche 7 des Grundkörpers 41 führt.

Im Bereich der Auskopplungsstruktur 31, die durch eine Fresnelstruktur, wie sie in Figur 3 gezeigt ist, gebildet ist, befindet sich zwischen der Oberfläche der Fresnelstruktur und der von der Klebstoffschicht 51 gebildeten Zwischenschicht eine Füllung 53 mit einem Füllungsmaterial dessen Brechungsindex dem ersten Brechungsindex $n_1$, also dem Brechungsindex des Grundkörpermaterials, entspricht. Durch die Anpassung des Brechungsindex des Füllmaterials an den Brechungsindex $n_1$ des Grundkörpermaterials kann vermieden werden, dass die Auskopplungsstruktur 31 im durch sie hindurchtretenden Umgebungslicht sichtbar ist und somit einen störenden Seheindruck erzeugen würde.

Die Folie 49 kann beispielsweise eine Sonnenbrillenkomponente sein, die eine absorbierende, reflektierende oder polarisierende Beschichtung oder eine Färbung zum Reduzieren der Transmission durch das Brillenglas 3 aufweist. Die Beschichtung oder Färbung kann dabei bereits vor dem Verkleben der Folie 49 mit dem Grundkörper 41 vorhanden sein oder sie kann nach dem Aufkleben der Folie 49 auf den Grundkörper 41 auf diese aufgebracht oder eingebracht werden.

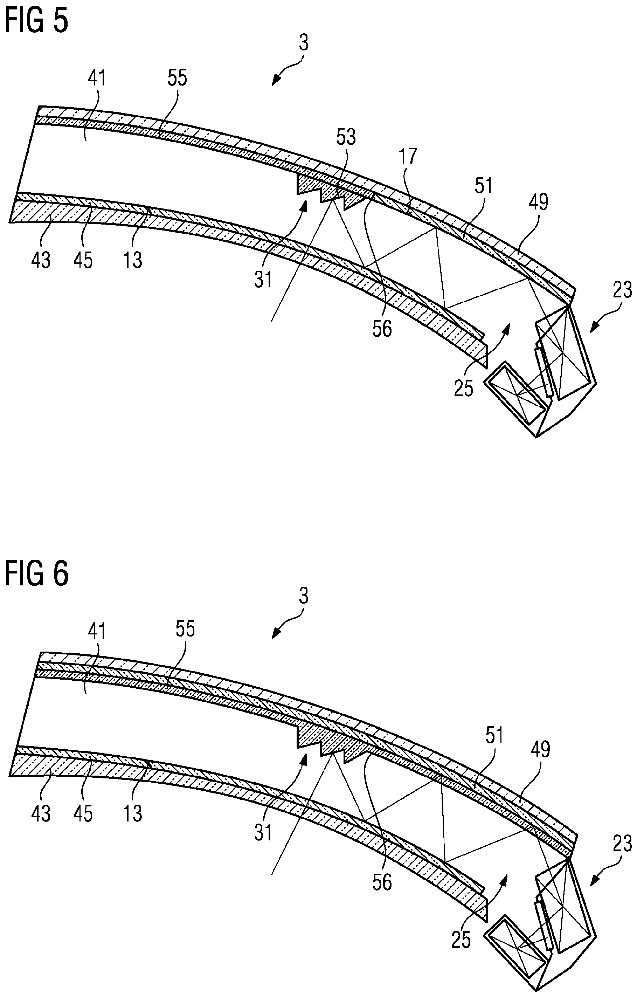

Eine Abwandlung der in Figur 4 gezeigten Ausführungsvariante ist in Figur 5 dargestellt. Die Abwandlung unterscheidet sich von der in Figur 4 dargestellten Variante dadurch, dass die Klebstoffschicht, mit der die Folie 49 am Grundkörper 41 befestigt ist, zweigeteilt ist. Im Lichtleitabschnitt, also im Bereich zwischen der Auskopplungsstruktur 31 und dem Einkopplungsabschnitt 25, findet derselbe Klebstoff wie in der in Figur 4 beschriebenen Ausführungsvariante Verwendung. Im Bereich des Lichtleitabschnitts entspricht die Klebstoffschicht daher der Klebstoffschicht 51 aus Figur 4. Ab der Auskopplungsstruktur 31 findet dagegen eine Klebstoffschicht 55 mit einem Klebstoff Verwendung, der auch als Füllung für die Fresnelstruktur dient. Dieser Klebstoff weist einen Brechungsindex auf, der an den ersten Brechungsindex $n_1$ angepasst ist. In dieser Variante kann zwar die Trennlinie 56 zwischen den beiden Klebstoffen sichtbar sein, jedoch befindet sich diese Trennlinie 56 in der Regel außerhalb des zentralen Gesichtsfeldes, so dass sie für den Brillenträger nicht sonderlich störend wirkt.

Eine weitere Abwandlung der in Figur 4 dargestellten Ausführungsvariante ist in Figur 6 gezeigt. In dieser Ausführungsvariante erstreckt sich die Klebstoffschicht 55 mit dem brechungsindexangepassten Klebstoff über die gesamte Außenfläche des Grundkörpers 41. Aufgrund der Tatsache, dass der Brechungsindex des brechungsindexangepassten Klebstoffes an den Brechungsindex $n_1$ des Grundkörpermaterials angepasst ist, beeinträchtigt diese Schicht den Durchblick durch das Brillenglas 3 nicht. Über der Klebstoffschicht 55 mit dem brechungsindexangepassten Klebstoff ist dann die Klebstoffschicht 51 aus dem Klebstoff mit dem zweiten Brechungsindex $n_2$ angeordnet. Da der Brechungsindex der brechungsindexangepassten Klebstoffschicht 55 dem Brechungsindex des Grundkörpermaterials entspricht, weist die Grenzfläche zwischen der brechungsindexangepassten Klebstoffschicht 55 und der Klebstoffschicht 51 mit dem zweiten Brechungsindex $n_2$ im Wesentlichen denselben Grenzwinkel $\theta_G$ wie die in Figur 4 vorhandene Grenzfläche zwischen dem Grundkörper 41 und der Klebstoffschicht 51 auf. Aufgrund der Brechungsindexanpassung der Klebstoffschicht 55 an den Brechungsindex $n_1$ des Grundkörpermaterials 41 kann diese brechungsindexangepasste Klebstoffschicht 55 in ihrem optischen Verhalten daher als Teil des Grundkörpers 41 angesehen werden. Es sei an dieser Stelle angemerkt, dass sich die aneinander angepassten Brechungsindizes wie zuvor bereits erwähnt maximal 5 ‰, vorzugsweise maximal 1 ‰, voneinander unterscheiden. Diese Unterschiede führen zu kleinen Abweichungen in den Grenzwinkeln $\theta_G$ die gemäß Gleichung 1 für die Grenzfläche zwischen dem brechungsindexangepassten Klebstoffschicht 55 und der Klebstoffschicht 51 mit dem zweiten Brechungsindex $n_2$ einerseits und für die Grenzfläche zwischen dem Grundkörper 41 und der Klebstoffschicht 51 mit dem zweiten Brechungsindex n2 andererseits ermittelt werden. Im Rahmen der Erfindung können diese kleinen Abweichungen jedoch vernachlässigt werden, so dass diese Grenzwinkel im Rahmen der Erfindung als gleich angesehen werden können.

In Figur 6 erstreckt sich die Klebstoffschicht 51 über die gesamte brechungsindexangepasste Klebstoffschicht 55. Es besteht aber auch die Möglichkeit, die Klebstoffschicht 51 lediglich im Lichtleitabschnitt des Brillenglases 3, also in dem sich zwischen dem Einkopplungsabschnitt 25 und der Auskopplungsstruktur 31 erstreckenden Brillenglasabschnitt, vorzusehen. In den übrigen Abschnitten wäre dann die brechungsindexangepasste Klebstoffschicht 55 dicker als im Lichtleitabschnitt, um die Dicke der im Lichtleitabschnitt zusätzlich vorhandenen Klebstoffschicht mit dem zweiten Brechungsindex $n_2$ auszugleichen. Zwar kann auch in dieser Variante die laterale Trennlinie zwischen den beiden Klebstoffen in dem durch das Brillenglas 3 hindurchtretenden Umgebungslicht sichtbar sein, jedoch befindet sich diese Trennlinie, wie die Trennlinie 56 in Figur 5, in der Regel außerhalb des zentralen Gesichtsfeldes, so dass sie für den Brillenträger nicht sonderlich störend wirkt.

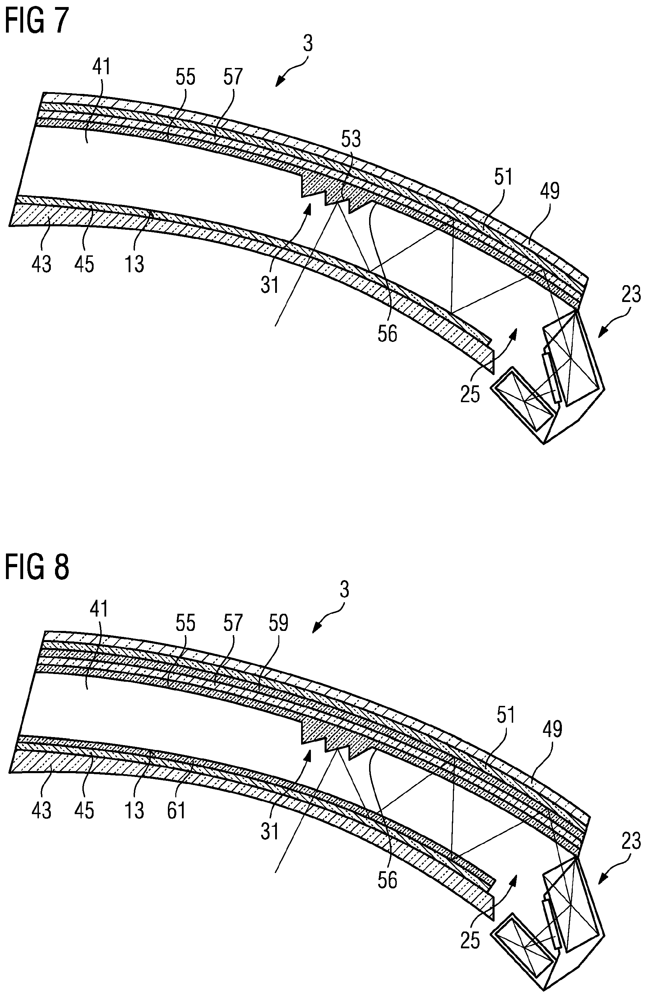

In Figur 6 ist die Klebstoffschicht 51 mit dem zweiten Brechungsindex $n_2$ direkt auf die brechungsindexangepasste Klebstoffschicht 55 aufgebracht. Es besteht jedoch auch die Möglichkeit, dass sich zwischen der brechungsindexangepassten Klebstoffschicht 55 und der Klebstoffschicht 51 mit dem zweiten Brechungsindex $n_2$ eine Folie 57 befindet, wie dies in Figur 7 dargestellt ist. Die Folie 57 braucht nicht notwendigerweise einen Brechungsindex aufzuweisen, der an den Brechungsindex der brechungsindexangepassten Klebstoffschicht 55 angepasst ist. Wenn sich der Brechungsindex der Folie 57 vom Brechungsindex der brechungsindexangepassten Klebstoffschicht 55 unterscheidet und wie im vorliegenden Beispiel eine gleichmäßige Dicke aufweist, führt dies lediglich zu einer über die gesamte Schicht gleichwirkenden Brechung, so dass das Sehempfinden nicht negativ beeinflusst wird. Im Falle der Folie 57 gilt jedoch, dass die Bedingung für das Auftreten der Totalreflexion an der Grenzfläche zwischen der Folie 57 und der Klebstoffschicht 51 mit dem zweiten Brechungsindex $n_2$ erfüllt sein müssen. Die Folie 57 kann aber auch einen an den Brechungsindex der darunter liegenden Klebstoffschicht 55 und damit an den ersten Brechungsindex $n_1$, angepasst sein. In diesem Fall ist der Grenzwinkel $\theta_G$ gleich dem Grenzwinkel der Grenzfläche zwischen dem Grundkörper 41 und der Klebstoffschicht 51 aus Figur 4.

Die Folie 57 ermöglicht eine größere Auswahl an Materialkombinationen, da sie als haftvermittelnde Schicht dienen kann, wenn der Klebstoff der brechzahlangepassten Klebstoffschicht 55 und der Klebstoff der Schicht 51 mit dem zweiten Brechungsindex $n_2$ nur schlecht aneinander haften. Darüber hinaus bietet die Folie fertigungstechnische Vorteile, da zumindest die Klebstoffschicht 51 mit dem zweiten Brechungsindex $n_2$ auf die Folie 57 aufgebracht werden kann, bevor diese auf die brechungsindexangepasste Klebstoffschicht 55 aufgebracht wird. Die Folie kann die Herstellung des Brillenglases insofern erleichtern, als dass sie als Form bei der Aushärtung der Zwischenschicht dienen kann und die Geometrie vorgibt. Es wäre auch denkbar, die Folie nur für die Härtung zu verwenden und danach wieder zu entfernen. In diesem Fall wäre die Oberfläche der Folie derart behandelt, dass sie sich leicht wieder von der Zwischenschicht lösen lässt. Es besteht darüber hinaus die Möglichkeit, auch die Funktionsschicht 49 (in Form einer weiteren Folie oder in Form einer Beschichtung) bereits auf die Klebstoffschicht 51 mit dem zweiten Brechungsindex $n_2$ aufzubringen, bevor das gesamte Schichtsystem auf die brechzahlangepasste Klebstoffschicht 55 aufgebracht wird. Zusätzlich oder alternativ besteht die Möglichkeit, die brechzahlangepasste Klebstoffschicht 55 vorab auf die Folie 57 aufzubringen und die Folie 57 danach mit Hilfe der brechzahlangepassten Klebstoffschicht 55 mit dem Grundkörper 41 zu verkleben. Als weitere Alternative kann auf beide Bauteile, also die Folie 57 und den Grundkörper 41, Klebstoff aufgebracht werden, wobei die Bauteile dann anschließend zusammengefügt werden.

Figur 8 zeigt eine Variante des Brillenglases 3, in der die Klebstoffschicht 51 mit dem niedrigbrechenden Klebstoff mit Hilfe einer weiteren Klebstoffschicht 59, welche aus einem Klebstoff mit einem an den Brechungsindex $n_1$ des Grundkörpermaterials brechungsindexangepassten Klebstoff besteht, mit der Folie 57 als einem Trägermaterial verklebt ist. Die Folie 57 selbst ist wiederum über eine Klebstoffschicht 55 mit einem an den Brechungsindex des Grundkörpermaterials brechungsindexangepassten Klebstoff mit dem Grundkörper 41 verklebt. Die Klebstoffschicht 55 dient dabei auch zum Auffüllen der Fresnelstruktur 31. Dies kann insbesondere dann vorteilhaft sein, wenn der niedrigbrechende Klebstoff aufgrund seiner chemischen Zusammensetzung, seiner Viskosität, seiner Aushärtezeiten, seines Aushärtungsverfahrens, seiner Festigkeit im ausgehärteten Zustand oder anderer Eigenschaften nicht ohne weiteres auf den Grundkörper 41 und/oder die Folie 57 aufgebracht werden kann. Entsprechend ist in Figur 8 auch eine an den Brechungsindex des Grundkörpermaterials brechungsindexangepasste Klebstoffschicht 61 zwischen dem Grundkörper 41 und der an das Korrekturglas 43 angrenzenden Klebstoffschicht 45 mit dem niedrigbrechenden Klebstoff angeordnet.

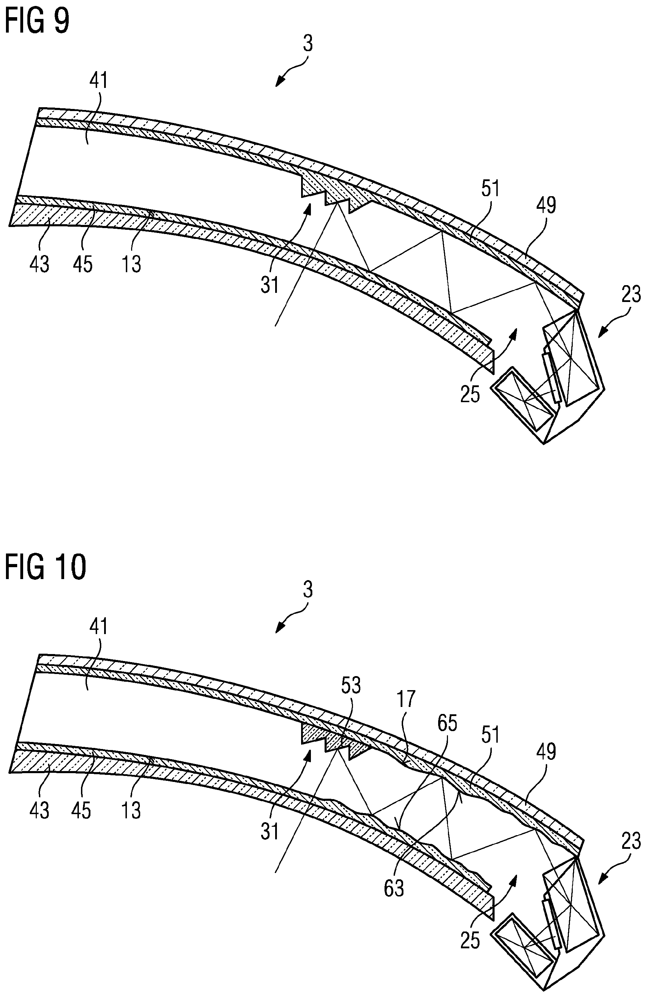

Eine weitere Ausführungsvariante für ein erfindungsgemäßes Brillenglas 3 ist in Figur 9 gezeigt. Diese Ausführungsvariante unterscheidet sich von der in Figur 4 gezeigten Ausführungsvariante dadurch, dass die Klebstoffschicht 51 mit dem niedrigbrechenden Klebstoff direkt auf die Oberfläche des Grundkörpers 41 aufgebracht ist und dass der niedrigbrechende Klebstoff auch zum Auffüllen der Fresnelstruktur 31 benutzt wird. Auf den niedrigbrechenden Klebstoff ist dann die das Funktionselement bildende Folie 49 aufgebracht. Durch die Variationen in der Dicke der niedrigbrechenden Klebstoffschicht 51 im Bereich der Fresnelstruktur 31 ist die Durchsicht durch das Brillenglas 3 beeinträchtigt. Wenn die Fresnelstruktur 31 in einem Bereich des Grundkörpers 41 angeordnet ist, der bei geradeaus schauendem Auge außerhalb des zentralen Gesichtsfeldes liegt, ist dies jedoch nicht oder kaum störend. Die Qualität des virtuellen Bildes wird in der in Figur 9 dargestellten Variante jedoch nicht beeinträchtigt.

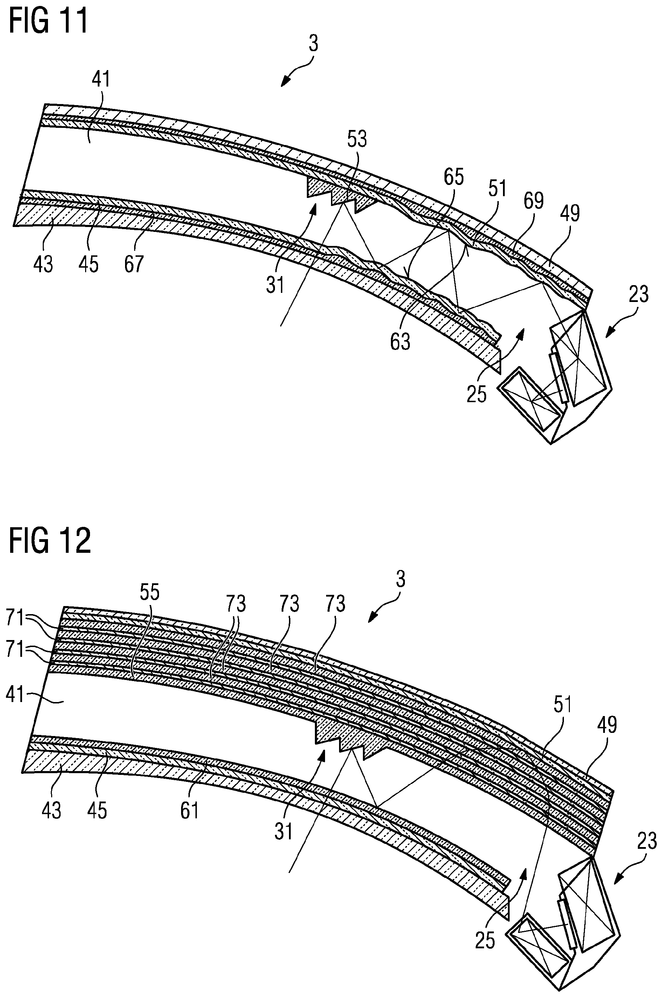

In Figur 10 ist ein Brillenglas 3 dargestellt, in dem die Innenfläche 13 und die Außenfläche 17 im Bereich des Lichtleitabschnittes, also zwischen dem Einkopplungsabschnitt 25 und der Auskopplungsstruktur 31, Freiformflächen 63 und 65 aufweisen, wobei die durch die Freiformflächen 63, 65 in den Oberflächen entstehenden Vertiefungen mittels der Klebstoffschichten 45 und 51 aus dem niedrigbrechenden Klebstoff aufgefüllt werden, so dass eine sphärische Fläche entsteht, auf die das Korrekturglas 43 sowie die ein Funktionselement bildende Folie 49 aufgebracht werden können. Bei sehr starken Krümmungen im Bereich der Freiformflächen 63, 65 kann es jedoch sinnvoll sein, die Klebstoffschicht 45, 51 mit dem niedrigbrechenden Klebstoff in einer gleichmäßigen Dicke aufzubringen und die Vertiefungen im Bereich der Freiformflächen durch zusätzliche Klebstoffschichten 67, 69 aus einem Klebstoff mit einem an den Brechungsindex des Grundkörpermaterials angepassten Brechungsindex aufzufüllen, wie dies in Figur 11 dargestellt ist. Auf diese Weise können Beeinträchtigungen bei der Durchsicht durch das Brillenglas aufgrund von schwankenden Dicken der Klebstoffschicht mit dem niedrigbrechenden Klebstoff minimiert werden.

Noch eine weitere Ausführungsvariante des erfindungsgemäßen Brillenglases 3 ist in Figur 12 dargestellt. In dieser Ausführungsvariante erfolgt eine Lichtbrechung durch eine Aufeinanderfolge von Folien 71 und Klebstoffen 73, deren Materialien verschiedene, zum Grundkörper 41 hin zunehmende Brechungsindizes aufweisen. Mit Hilfe der Lichtbrechung kann eine Vergrößerung des Einfallswinkels $\theta_E$ auf die Grenzfläche zur Klebstoffschicht 51 erreicht werden. Da durch die Aufeinanderfolge von Folien 71 und Klebstoffschichten 73 der Einfallswinkel $\Theta_E$ auf die Grenzfläche zur Klebstoffschicht 51 mit dem niedrigbrechenden Klebstoff vergrößert wird, können die Anforderungen an den verwendeten Klebstoff vermindert werden, da größere Grenzwinkel $\theta_G$ zugelassen werden können und daher Klebstoffe mit höheren Brechungsindizes Verwendung finden können. Durch die Begünstigung der Totalreflexion an der Klebstoffschicht 51 mit dem niedrigbrechenden Klebstoff wird die Auswahl an möglichen Klebstoffen für die Herstellung der Klebstoffschicht 51 mit dem niedrigbrechenden Klebstoff vergrößert. Statt der beschriebenen Abfolge von Folien und Klebstoffen können in dieser Ausführungsvariante auch Materialien mit Brechungsindexgradienten zum Vergrößern des Einfallswinkels $\theta_E$ Verwendung finden.

Die vorliegende Erfindung wurde anhand von Ausführungsbeispielen unter Bezugnahme auf die beiliegenden Figuren zu Erläuterungszwecken detailliert beschrieben. Die Ausführungsbeispiele sollen jedoch einem Fachmann lediglich Konzepte zur Realisierung der Erfindung zur Verfügung stellen und nicht die Erfindung auf die dargestellten Ausführungsbeispiele beschränken. Wie bereits an verschiedenen Stellen der Ausführungsbeispiele beschrieben worden ist, kann im Rahmen der Erfindung von den beschriebenen Ausführungsbeispielen abgewichen werden. Beispielsweise kann statt einer reflektiven Auskopplung, wie sie in den Ausführungsbeispielen beschrieben ist, auch eine refraktive Auskopplung oder eine diffraktive Auskopplung erfolgen. Das Prinzip einer refraktiven Auskopplung ist bspw. in DE 10 2014 115 341 beschrieben, auf die im Hinblick auf die grundsätzliche Ausgestaltung refraktiver Auskopplungsstrukturen verwiesen wird. Weitere Beispiele für reflektive oder refraktive Auskopplungsstrukturen sind auch in US 2012/0002294 A1 beschrieben, auf die ebenfalls verwiesen wird. Darüber hinaus wird bezüglich Auskopplungsstrukturen, die auf Beugungsgittern beruhen, auf die US 2006/0126181 A1 und die US 2010/0220295 A1 verwiesen. Weiterhin braucht das Korrekturglas nicht an der Innenfläche des Grundkörpers angeordnet zu sein, es kann stattdessen an der Außenfläche des Grundkörpers angeordnet sein. Außerdem besteht die Möglichkeit, die Korrekturwirkung auf zwei Korrekturgläser aufzuteilen, von denen eines an der Innenfläche und das andere an der Außenfläche des Grundkörpers angeordnet ist. Entsprechendes gilt auch für andere Funktionselemente, die als Ergänzungselemente am Grundkörper geeignet sind. Zudem können Merkmale der einzelnen Ausführungsbeispiele miteinander kombiniert werden. Die vorliegende Erfindung soll daher lediglich durch die beigefügten Ansprüche beschränkt sein.

**Patentansprüche**

1. Brillenglas (3) für eine Abbildungsoptik zum Erzeugen eines virtuellen Bildes von einem auf einem Bildgeber (21) dargestellten Ausgangsbild, umfassend einen Grundkörper (41) und zumindest ein an dem Grundkörper (41) angebrachtes Ergänzungselement (43, 49), wobei

- der Grundkörper (41) zumindest in einer an das zumindest eine Ergänzungselement (43, 49) angrenzenden Schicht aus einem Material mit einem ersten Brechungsindex $n_1$ besteht und der Grundkörper (41) eine dem Auge zuzuwendende Innenfläche (13), eine vom Auge abzuwendende Außenfläche (17) und einen Lichtleitabschnitt umfasst, der sich zwischen einem Einkopplungsabschnitt (25) zum Einkoppeln eines Abbildungsstrahlengangs zwischen die Innenfläche (13) und die Außenfläche (17) und einer Auskopplungsstruktur (31) zum Auskoppeln des Abbildungsstrahlengangs aus dem Grundkörper (41) erstreckt und in dem der eingekoppelte Abbildungsstrahlengang durch Reflexion an wenigstens einem Reflexionsabschnitt (R1, R2, R3, R4) der Innenfläche (13) und/oder der Außenfläche (17) zur Auskopplungsstruktur (31) geleitet wird, und
- das zumindest eine Ergänzungselement (43, 49), welches ein an der Innenfläche (13) des Grundkörpers (41) angebrachtes erstes Korrekturglas und/oder ein an der Außenfläche (17) des Grundkörpers (41) angebrachtes zweites Korrekturglas umfasst, wobei zumindest eine Ergänzungselement (43, 49) mit wenigstens einem Reflexionsabschnitt (R1, R2, R3, R4) der Innenfläche (13) und/oder der Außenfläche (17) des Grundkörpers (41) überlappt und wobei zumindest im Überlappbereich des zumindest einen Ergänzungselements (43, 49) mit dem wenigstens einen Reflexionsabschnitt (R1, R2, R3, R4) der Innenfläche (13) und/oder der Außenfläche (17) des Grundkörpers (41) eine viskose oder feste Zwischenschicht (45, 51) zwischen dem zumindest einen Ergänzungselement (43, 49) und dem Grundkörper (41) angeordnet ist,

wobei

das Material der viskosen oder festen Zwischenschicht (45, 51) einen zweiten Brechungsindex $n_2$ aufweist, der die Bedingung $n_2 < n_1 \sin(\theta_E)$ erfüllt, wobei $\theta_E$ einen Einfallswinkel der vom Einkopplungsabschnitt (25) ausgehenden und auf den Reflexionsabschnitt (R1, R2, R3, R4) einfallenden Lichtstrahlen des Abbildungsstrahlengangs repräsentiert, der derart gewählt ist, dass mindestens 50 % der Lichtstrahlen des Abbildungsstrahlengangs einen Einfallswinkel $\theta > \theta_E$ aufweisen,

**dadurch gekennzeichnet, dass**

dass der Grundkörper (41) zumindest auf einem Bereich des Lichtleitabschnitts eine Oberflächenschicht (53, 55, 59, 61, 71, 73) umfasst, und

die Oberflächenschicht des Grundkörpers (41) wenigstens eine an die viskose oder feste Zwischenschicht angrenzende Schicht (53, 55, 59, 61) aus dem Material mit dem ersten Brechungsindex oder einen dem ersten Brechungsindex entsprechenden Brechungsindex umfasst.

2. Brillenglas (3) nach Anspruch 1, **dadurch gekennzeichnet, dass** $\theta_E$ einen Einfallswinkel der vom Einkopplungsabschnitt (25) ausgehenden und auf den Reflexionsabschnitt (R1, R2, R3, R4) einfallenden Lichtstrahlen des Abbildungsstrahlengangs repräsentiert, der derart gewählt ist, dass mindestens 75 % der Lichtstrahlen des Abbildungsstrahlengangs einen Einfallswinkel $\theta > \theta_E$ aufweisen.

3. Brillenglas (3) nach Anspruch 1 oder Anspruch 2, **dadurch gekennzeichnet, dass** die Bedingung $n_2 < n_1 \sin(\theta_E)$ im gesamten Wellenlängenbereich des Abbildungsstrahlengangs erfüllt ist.

4. Brillenglas (3) nach einem der vorangehenden Ansprüche, **dadurch gekennzeichnet, dass** die Bedingung $n_2 < n_1 \sin(\theta_E)$ im gesamten sichtbaren Wellenlängenbereich erfüllt ist.

5. Brillenglas (3) nach einem der vorangehenden Ansprüche, **dadurch gekennzeichnet, dass** das Material der viskosen oder festen Zwischenschicht (45, 51) weniger als 20 % der Lichtstrahlen des Abbildungsstrahlengangs absorbiert.

6. Brillenglas (3) nach einem der vorangehenden Ansprüche, **dadurch gekennzeichnet, dass** das zumindest eine Ergänzungselement (43, 49) einen dritten Brechungsindex aufweist, der dem ersten Brechungsindex entspricht.

7. Brillenglas (3) nach einem der vorangehenden Ansprüche, **dadurch gekennzeichnet, dass** die viskose oder feste Zwischenschicht (45, 51) im gesamten Bereich, in dem das zumindest eine Ergänzungselement (43,49) am Grundkörper (41) angebracht ist, vorhanden ist.

8. Brillenglas (3) nach einem der Ansprüche 1 bis 7, **dadurch gekennzeichnet, dass** die Oberflächenschicht des Grundkörpers aus einer Mehrzahl von Schichten (71, 73) besteht, wobei

- die Schichten (71, 73) aus Materialien bestehen, deren Brechungsindizes größer als der zweite Brechungsindex $n_2$ sind,
- die an die viskose oder feste Zwischenschicht (51) angrenzende Schicht aus dem Material mit dem ersten Brechungsindex $n_1$ oder einen dem ersten Brechungsindex $n_1$ entsprechenden Brechungsindex besteht und
- die Brechungsindizes der Schichten ausgehend von der an die viskose oder feste Zwischenschicht (51) angrenzenden Schicht zunehmen.

9. Brillenglas (3) nach einem der Ansprüche 1 bis 7, **dadurch gekennzeichnet, dass** die Oberflächenschicht des Grundkörpers aus einem Material mit Brechungsindexgradient besteht, wobei der niedrigste Brechungsindex dem ersten Brechungsindex $n_1$ entspricht und die Oberflächenschicht so orientiert ist, dass sie mit dem niedrigsten Brechungsindex an die viskose oder feste Zwischenschicht (51) angrenzt.

10. Brillenglas (3) nach einem der vorangehenden Ansprüche, **dadurch gekennzeichnet, dass** zwischen der viskosen oder festen Zwischenschicht (51) und dem Grundkörper (41) oder zwischen der viskosen oder der festen Zwischenschicht (51) und der Oberflächenschicht (55) des Grundkörpers (41) eine Folie (57) oder ein Formteil vorhanden ist.

**11.** Brillenglas (3) nach einem der vorangehenden Ansprüche, **dadurch gekennzeichnet, dass** das Material der viskosen oder festen Zwischenschicht (45, 51) und/oder das Material der Oberflächenschicht (53, 55, 59, 6, 73) ein Klebstoff ist bzw. Klebstoffe sind.

**12.** Brillenglas (3) nach einem der vorangehenden Ansprüche, **dadurch gekennzeichnet, dass** das Material der viskosen oder festen Zwischenschicht (45, 51) auf einem Trägermaterial (57) aufgebracht ist, welches auf die Innenfläche (13) bzw. die Außenfläche (17) des Grundkörpers (41) aufgebracht ist.

**13.** Brillenglas (3) nach einem der vorangehenden Ansprüche, **dadurch gekennzeichnet, dass** der wenigstens eine Reflexionsabschnitt (R1, R2, R3, R4) der Innenfläche (13) und/oder der Außenfläche (17) des Grundkörpers (41) eine Freiform (63, 65) aufweist.

**14.** Brillenglas (3) nach Anspruch 13, **dadurch gekennzeichnet, dass** die viskose oder feste Zwischenschicht (45, 51) eine gleichmäßige Dicke aufweist und auf der dem Grundkörper (41) abgewandten Seite der viskosen oder festen Zwischenschicht (45, 51) eine Deckschicht (67, 69) aufgebracht ist, die aus dem Material des Grundkörpers (41) oder einem Material mit einem vierten Brechungsindex besteht, wobei der vierte Brechungsindex dem ersten Brechungsindex $n_1$ entspricht, und die Deckschicht (67, 69) auf ihrer der ersten Zwischenschicht (45, 51) abgewandten Seite eine optisch ebene sphärische Oberfläche besitzt.

**15.** Abbildungsoptik zum Erzeugen eines virtuellen Bildes von einem auf einem Bildgeber (21) dargestellten Ausgangsbild **dadurch gekennzeichnet, dass** sie wenigstens ein Brillenglas (3) nach einem der vorangehenden Ansprüche umfasst.

**16.** Datenbrille **dadurch gekennzeichnet, dass** sie wenigstens eine Abbildungsoptik nach Anspruch 15 umfasst.


**Claims**

**1.** Lens (3) for an imaging optical unit for producing a virtual image of an initial image presented on an image generator (21), said lens comprising a main body (41) and at least one complementary element (43, 49) attached to the main body (41), wherein

- the main body (41), at least in a layer adjoining the at least one complementary element (43, 49), consists of a material with a first refractive index $n_1$ and the main body (41) comprises an inner surface (13) to face the eye, an outer surface (17) to face away from the eye and a light guiding portion, which extends between an input coupling portion (25) for input coupling an imaging beam path between the inner surface (13) and the outer surface (17) and an output coupling structure (31) for coupling the imaging beam path out of the main body (41) and in which light guiding portion the input coupled imaging beam path is guided to the output coupling structure (31) by reflection at at least one reflection portion (R1, R2, R3, R4) of the inner surface (13) and/or of the outer surface (17), and
- the at least one complementary element (43, 49), which comprises a first corrective lens attached to the inner surface (13) of the main body (41) and/or a second corrective lens attached to the outer surface (17) of the main body (41), wherein at least one complementary element (43, 49) overlaps with at least one reflection portion (R1, R2, R3, R4) of the inner surface (13) and/or the outer surface (17) of the main body (41) and wherein a viscous or solid intermediate layer (45, 51) is arranged between the at least one complementary element (43, 49) and the main body (41), at least in the overlap region of the at least one complementary element (43, 49) with the at least one reflection portion (R1, R2, R3, R4) of the inner surface (13) and/or of the outer surface (17) of the main body (41),

wherein

the material of the viscous or solid intermediate layer (45, 51) has a second refractive index $n_2$, which satisfies the condition $n_2 < n_1 \sin(\theta_E)$, where $\theta_E$ represents an angle of incidence of the light rays of the imaging beam path that emanate from the input coupling portion (25) and that are incident on the reflection portion (R1, R2, R3, R4), said angle of incidence being chosen in such a way that at least 50% of the light rays of the imaging beam path have an angle of incidence $\theta > \theta_E$,
**characterized in that**
the main body (41) comprises a surface layer (53, 55, 59, 61, 71, 73), at least on a region of the light guiding portion, and

the surface layer of the main body (41) comprises at least one layer (53, 55, 59, 61), adjoining the viscous or solid intermediate layer, made of the material having the first refractive index or a refractive index corresponding to the first refractive index.

2. Lens (3) according to Claim 1, **characterized in that** $\theta_E$ represents an angle of incidence of the light rays of the imaging beam path that emanate from the input coupling portion (25) and that are incident on the reflection portion (R1, R2, R3, R4), said angle of incidence being chosen in such a way that at least 75% of the light rays of the imaging beam path have an angle of incidence $\theta > \theta_E$.

3. Lens (3) according to Claim 1 or Claim 2, **characterized in that** the condition $n_2 < n_1 \sin(\theta_E)$ is satisfied in the entire wavelength range of the imaging beam path.

4. Lens (3) according to any of the preceding claims, **characterized in that** the condition $n_2 < n_1 \sin(\theta_E)$ is satisfied in the entire visible wavelength range.

5. Lens (3) according to any of the preceding claims, **characterized in that** the material of the viscous or solid intermediate layer (45, 51) absorbs less than 20% of the light rays of the imaging beam path.

6. Lens (3) according to any of the preceding claims, **characterized in that** the at least one complementary element (43, 49) has a third refractive index, which corresponds to the first refractive index.

7. Lens (3) according to any of the preceding claims, **characterized in that** the viscous or solid intermediate layer (45, 51) is present in the entire region in which the at least one complementary element (43, 49) is attached to the main body (41).

8. Lens (3) according to any of Claims 1 to 7, **characterized in that** the surface layer of the main body consists of a plurality of layers (71, 73), wherein

   - the layers (71, 73) consist of materials whose refractive indices are greater than the second refractive index $n_2$,
   - the layer adjoining the viscous or solid intermediate layer (51) consists of the material having the first refractive index $n_1$ or a refractive index corresponding to the first refractive index $n_1$ and
   - the refractive indices of the layers increase proceeding from the layer adjoining the viscous or solid intermediate layer (51).

9. Lens (3) according to any of Claims 1 to 7, **characterized in that** the surface layer of the main body consists of a material with a refractive index gradient, wherein the lowest refractive index corresponds to the first refractive index $n_1$ and the surface layer is oriented in such a way that, with the lowest refractive index, it adjoins the viscous or solid intermediate layer (51).

10. Lens (3) according to any of the preceding claims, **characterized in that** a film (57) or a shaped part is present between the viscous or solid intermediate layer (51) and the main body (41) or between the viscous or the solid intermediate layer (51) and the surface layer (55) of the main body (41).

11. Lens (3) according to any of the preceding claims, **characterized in that** the material of the viscous or solid intermediate layer (45, 51) and/or the material of the surface layer (53, 55, 59, 6, 73) is an adhesive or are adhesives.

12. Lens (3) according to any of the preceding claims, **characterized in that** the material of the viscous or solid intermediate layer (45, 51) is applied to a carrier material (57), which is applied to the inner surface (13) and/or the outer surface (17) of the main body (41).

13. Lens (3) according to any of the preceding claims, **characterized in that** the at least one reflection portion (R1, R2, R3, R4) of the inner surface (13) and/or of the outer surface (17) of the main body (41) has a free form (63, 65).

14. Lens (3) according to Claim 13, **characterized in that** the viscous or solid intermediate layer (45, 51) has a uniform thickness and a capping layer (67, 69) is applied on the side of the viscous or solid intermediate layer (45, 51) facing away from the main body (41), said capping layer consisting of the material of the main body (41) or a material having a fourth refractive index, wherein the fourth refractive index corresponds to the first refractive index $n_1$, and the capping layer (67, 69) has an optically plane spherical surface on its side facing away from the first intermediate layer (45, 51).

**15.** Imaging optical unit for producing a virtual image of an initial image presented on an image generator (21), **characterized in that** it comprises at least one lens (3) according to any of the preceding claims.

**16.** Pair of smartglasses, **characterized in that** it comprises at least one imaging optical unit according to Claim 15.

**Revendications**

**1.** Verre de lunettes (3) pour une optique de reproduction destinée à générer une image virtuelle à partir d'une image initiale représentée sur un imageur (21), comprenant un corps de base (41) et au moins un élément complémentaire (43, 49) fixé au corps de base (41),

- le corps de base (41) étant constitué, au moins dans une couche adjacente audit au moins un élément complémentaire (43, 49), d'un matériau ayant un premier indice de réfraction $n_1$ et le corps de base (41) comprenant une surface intérieure (13), à diriger vers l'œil, une surface extérieure (17), à diriger à l'opposé de l'œil, et une portion de guidage de lumière qui s'étend entre une portion d'injection (25), destinée à injecter par couplage un trajet de rayons de reproduction entre la surface intérieure (13) et la surface extérieure (17), et une structure de sortie par couplage (31), destinée à la sortie par couplage du trajet de rayons de reproduction hors du corps de base (41) et dans laquelle le trajet de rayons de reproduction injecté par couplage est guidé, par réflexion sur au moins une portion de réflexion (R1, R2, R3, R4) de la surface intérieure (13) et/ou de la surface extérieure (17) vers la structure de sortie par couplage (31), et
- l'au moins un élément complémentaire (43, 49) comprenant un premier verre correcteur fixé à la surface intérieure (13) du corps de base (41) et/ou un deuxième verre correcteur fixé à la surface extérieure (17) du corps de base (41), au moins un élément complémentaire (43, 49) chevauchant au moins une portion de réflexion (R1, R2, R3, R4) de la surface intérieure (13) et/ou de la surface extérieure (17) du corps de base (41) et une couche intermédiaire visqueuse ou solide (45, 51) étant disposée au moins dans la zone de chevauchement de l'au moins un élément complémentaire (43, 49) avec l'au moins une portion de réflexion (R1, R2, R3, R4) de la surface intérieure (13) et/ou de la surface extérieure (17) du corps de base (41) entre l'au moins un élément complémentaire (43, 49) et le corps de base (41),
le matériau de la couche intermédiaire visqueuse ou solide (45, 51) présentant un deuxième indice de réfraction $n_2$ qui satisfait à la condition $n_2 < n_1 \sin(\theta_E)$, $\theta_E$ représentant un angle d'incidence des rayons lumineux du trajet de rayons de reproduction émanant de la portion d'injection (25) et incidents sur la portion de réflexion (R1, R2, R3, R4), lequel est choisi de telle sorte qu'au moins 50 % des rayons lumineux du trajet de rayons de reproduction présentent un angle d'incidence $\theta > \theta_E$, **caractérisé en ce que**
le corps de base (41) comprend, au moins sur une zone de la portion de guidage de lumière, une couche superficielle (53, 55, 59, 61, 71, 73), et
la couche superficielle du corps de base (41) comprend au moins une couche (53, 55, 59, 61) adjacente à la couche intermédiaire visqueuse ou solide, constituée du matériau présentant le premier indice de réfraction ou un indice de réfraction correspondant au premier indice de réfraction.

**2.** Verre de lunettes (3) selon la revendication 1, **caractérisé en ce que** $\theta_E$ représente un angle d'incidence des rayons lumineux du trajet de rayons de reproduction émanant de la portion d'injection (25) et incidents à la portion de réflexion (R1, R2, R3, R4), lequel est choisi de telle sorte qu'au moins 75 % des rayons lumineux du trajet de rayons de reproduction présentent un angle d'incidence $\theta > \theta_E$.

**3.** Verre de lunettes (3) selon la revendication 1 ou la revendication 2, **caractérisé en ce que** la condition $n_2 < n_1 \sin(\theta_E)$ est satisfaite dans toute la plage de longueurs d'onde du trajet de rayons de reproduction.

**4.** Verre de lunettes (3) selon l'une des revendications précédentes, **caractérisé en ce que** la condition $n_2 < n_1 \sin(\theta_E)$ est satisfaite dans toute la plage de longueurs d'onde visibles.

**5.** Verre de lunettes (3) selon l'une des revendications précédentes, **caractérisé en ce que** le matériau de la couche intermédiaire visqueuse ou solide (45, 51) absorbe moins de 20 % des rayons lumineux du trajet de rayons de reproduction.

**6.** Verre de lunettes (3) selon l'une des revendications précédentes, **caractérisé en ce que** l'au moins un élément complémentaire (43, 49) présente un troisième indice de réfraction qui correspond au premier indice de réfraction.

7. Verre de lunettes (3) selon l'une des revendications précédentes, **caractérisé en ce que** la couche intermédiaire visqueuse ou solide (45, 51) est présente dans toute la zone dans laquelle l'au moins un élément complémentaire (43, 49) est fixé au corps de base (41).

8. Verre de lunettes (3) selon l'une des revendications 1 à 7, **caractérisé en ce que** la couche superficielle du corps de base est constituée d'une pluralité de couches (71, 73),

   - les couches (71, 73) étant constituées de matériaux dont les indices de réfraction sont supérieurs au deuxième indice de réfraction $n_2$,
   - la couche adjacente à la couche intermédiaire visqueuse ou solide (51) est constituée par le matériau ayant le premier indice de réfraction $n_1$ ou un indice de réfraction correspondant au premier indice de réfraction $n_1$, et
   - les indices de réfraction des couches augmentent à partir de la couche adjacente à la couche intermédiaire visqueuse ou solide (51).

9. Verre de lunettes (3) selon l'une des revendications 1 à 7, **caractérisé en ce que** la couche superficielle du corps de base est constituée d'un matériau à gradient d'indice de réfraction, l'indice de réfraction le plus faible correspondant au premier indice de réfraction $n_1$ et la couche superficielle étant orientée de telle sorte qu'elle est adjacente à la couche intermédiaire visqueuse ou solide (51) avec l'indice de réfraction le plus faible.

10. Verre de lunettes (3) selon l'une des revendications précédentes, **caractérisé en ce qu'**une feuille (57) ou une pièce moulée est présente entre la couche intermédiaire visqueuse ou solide (51) et le corps de base (41) ou entre la couche intermédiaire visqueuse ou solide (51) et la couche superficielle (55) du corps de base (41).

11. Verre de lunettes (3) selon l'une des revendications précédentes, **caractérisé en ce que** le matériau de la couche intermédiaire visqueuse ou solide (45, 51) et/ou le matériau de la couche superficielle (53, 55, 59, 6, 73) est un adhésif ou sont des adhésifs.

12. Verre de lunettes (3) selon l'une des revendications précédentes, **caractérisé en ce que** le matériau de la couche intermédiaire visqueuse ou solide (45, 51) est appliqué sur un matériau porteur (57), lequel est appliqué sur la surface intérieure (13) ou la surface extérieure (17) du corps de base (41).

13. Verre de lunettes (3) selon l'une des revendications précédentes, **caractérisé en ce que** l'au moins une portion de réflexion (R1, R2, R3, R4) de la surface intérieure (13) et/ou de la surface extérieure (17) du corps de base (41) présente une forme libre (63, 65).

14. Verre de lunettes (3) selon la revendication 13, **caractérisé en ce que** la couche intermédiaire visqueuse ou solide (45, 51) présente une épaisseur uniforme et sur le côté de la couche intermédiaire visqueuse ou solide (45, 51) opposé au corps de base (41) est appliquée une couche de recouvrement (67, 69), qui est constitué du matériau du corps de base (41) ou d'un matériau ayant un quatrième indice de réfraction, le quatrième indice de réfraction correspondant au premier indice de réfraction $n_1$, et la couche de recouvrement (67, 69) possédant une surface sphérique optiquement plane sur son côté opposé à la première couche intermédiaire (45, 51).

15. Optique de reproduction destinée à générer une image virtuelle d'une image initiale représentée sur un imageur (21), **caractérisée en ce qu'**elle comprend au moins un verre de lunettes (3) selon l'une des revendications précédentes.

16. Lunettes connectées, **caractérisées en ce qu'**elles comprennent au moins une optique de reproduction selon la revendication 15.

## FIG 1

## FIG 2

## FIG 3

## FIG 4

FIG 5

FIG 6

FIG 7

FIG 8

FIG 9

FIG 10

FIG 11

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060126181 A1
- US 20100220295 A1
- US 20120002294 A1
- US 6231183 B1
- JP 2012058404 A

- US 20080239422 A1
- US 4968117 A
- WO 2015158833 A
- DE 102014115341